# EUROPEAN PATENT SPECIFICATION

(11) **EP 4 165 972 B1**
(45) Date of publication and mention of the grant of the patent: **10.09.2025**
(21) Application number: 22200231.3
(22) Date of filing: 07.10.2022
(51) Int. Cl.: A01D 34/00, A01D 34/63, A01D 34/81, A01D 34/835, A01D 34/84, A01D 34/86

(54) **BRUSH CUTTER TOOL FOR AN AGRICULTURAL MACHINE AND AGRICULTURAL MACHINE PROVIDED WITH SUCH A BRUSH CUTTER TOOL**
BÜRSTENSCHNEIDWERKZEUG FÜR EINE LANDWIRTSCHAFTLICHE MASCHINE UND LANDWIRTSCHAFTLICHE MASCHINE MIT SOLCH EINEM BÜRSTENSCHNEIDWERKZEUG
OUTIL DE DÉBROUSSAILLEUSE POUR MACHINE AGRICOLE ET MACHINE AGRICOLE ÉQUIPÉE D'UN TEL OUTIL DE DÉBROUSSAILLEUSE

(30) Priority: 14.10.2021 IT 202100026294
(43) Date of publication of application: 19.04.2023
(73) Proprietor: Eurosystems S.p.A., 42045 Luzzara (Reggio Emilia) (IT)
(72) Inventor: BOVI, Fabio, 42045 LUZZARA (RE) (IT)
(74) Representative: Corradini, Corrado

(56) References cited:
- DE-U1- 202007 001 567
- US-A- 3 545 184
- US-A- 3 901 004
- US-A- 4 509 315
- EXTECH - MASZYNY OGRODNICZE: "Odchwaszczarka Eurosystems P130", 1 April 2020 (2020-04-01), XP055932328, Retrieved from the Internet <URL:https://www.youtube.com/watch?v=1OCMkPx1sVg> [retrieved on 20220616]

## Description

### Technical Field

The present invention relates to an agricultural machine.

More particularly, the present invention relates to an agricultural machine, such as for example a walking tractor, and a cutting tool associated with said agricultural machine.

### Prior art

As well known, a walking tractor is a multifunctional agricultural machine configured to be manoeuvred by a driver on foot, which comprises an internal combustion engine (petrol or diesel) adapted to drive the power take-off to which a cutting tool for mowing grass can be associated.

The cutting tool, as known, is arranged frontally and centrally to the walking tractor, so that the operations for mowing the turf can be easily controlled and appropriately managed by the operator of the walking tractor.

A known drawback in the industry, however, is that this arrangement of the cutting tool makes the grass mowing operations at/near the edges of the area where the grass is to be mowed, e.g. at pavements and/or fences and/or walls, complicated, inconvenient, and cumbersome.

At said edges, the driver is in fact forced to manoeuvre the walking tractor in an irregular manner in order to avoid collisions between the edge and the walking tractor and, at the same time, to allow the cutting tool to move to the edge, with the result that mowing operations are particularly slow and often not very precise.

The document Extech - Maszyny Ogrodnicze : "Odchwaszczarka Eurosystem P130", 1 April 2020, XP055932328, retrieve from internet on 2022-06-16, URL:https://www.youtube.com/watch?v=1OCMkPx1svg discloses an agriculture machinery comprising a support arm provided with a first segment connected to the agricultural machinery and a second segment, with one end through which it is hinged to the first segment and an opposite free end to which a cutting device is swivelly connected. Aim of the present invention is to solve said disadvantage of the prior art. Another aim is that of achieving such objective within the context of a rational, efficacious and relatively cost effective solution.

Such aims are achieved by the characteristics of the invention reported in the independent claims. The dependent claims outline preferred and/or particularly advantageous aspects of the invention.

### Disclosure of the invention

The invention, in particular, makes available a brush cutter tool for an agricultural machine as defined in claim 1.

Thanks to this solution, the invention makes available a brush cutter tool which allows, in use, to displace the cutting member from the central front area of the walking tractor towards a lateral front area, substantially bringing the cutting member closer to the edge at which the grass needs to be mowed.

This possible arrangement of the cutting member makes it possible to considerably facilitate the manoeuvres of the walking tractor and to make the grass mowing operations particularly rapid overall.

Another aspect of the invention provides that the brush cutter tool may comprise a rotational drive assembly of the cutting member, said drive assembly comprising a first drive shaft rotatably associated with the first segment with respect to a first rotation axis, a second drive shaft with which the cutting member is rotationally associated and which is rotatably associated with the second segment with respect to a second rotation axis, and in which the first shaft and the second shaft are mechanically connected in rotation.

Thanks to this solution, the brush cutter tool has a particularly simple constructive structure which allows both in the first position and in the second position to transmit to the cutting member the motion imposed by a drive motor placed on board the walking tractor to which it is connected.

Still another aspect of the invention provides that the first rotation axis of the first drive shaft may be coaxial to the hinge axis.

Thanks to this solution, the brush cutter tool has a reduced overall dimensions.

A further aspect of the invention provides that a first pulley or toothed wheel and a third pulley or toothed wheel may be keyed to the first drive shaft, and that a second pulley or toothed wheel, which is rotationally connected to the first pulley by means of a flexible connection member closed in a ring, may be keyed to the second drive shaft.

Thanks to this solution, the first drive shaft by means of the first pulley can be set in motion by the drive motor which can be arranged on board the walking tractor, so that the overall weight of the brush cutter tool is kept low and manoeuvring is made easier.

At the same time, by means of the second pulley and the third pulley, the motion imposed by the drive motor can be efficiently transmitted to the second drive shaft to which the cutting member is connected, keeping the construction structure of the brush cutter tool particularly rational and made up of elementary constituent elements in order to keep production costs low.

Still, a further aspect of the invention provides that the brush cutter tool may comprise an rotation blocking assembly of the second segment with respect to the first segment configured to selectively block the relative rotation with respect to the hinge axis between the first segment and the second segment, at least in the first position and in the second position, and to selectively allow a free rotation between the first segment and the second segment.

Thanks to this solution, the blocking assembly allows to vary the relative position of the second segment with respect to the first segment and to block it once a desired relative position has been reached.

In this way, the desired relative position can be effectively maintained for as long as necessary.

According to another aspect of the invention the blocking assembly comprises a toothed crown associated with one between the first segment and the second segment, and an insertion pin associated with the other one between the first segment and the second segment, the insertion pin being operable between an engagement position in which it is constrained by shape coupling to the toothed crown and prevents the rotation of the second segment with respect to the first segment, and a disengagement position in which it is released from the toothed crown and allows the rotation of the second segment with respect to the first segment.

Thanks to this solution, the blocking assembly has a particularly simple architecture that is easy to assemble and intuitive to use.

In particular, by simply displacing the insertion pin between the disengagement position in which it does not interface with the toothed crown and the engagement position, in which it is actually inserted within the groove defined between two consecutive notches of the toothed crown, it is possible to block the relative rotation of the second segment with respect to the first segment simply by exploiting the shape coupling between the insertion pin and the toothed crown.

Furthermore, another aspect of the invention provides that the blocking assembly may comprise an actuating lever integral with the insertion pin and configured to move the same between the engagement position and the disengagement position, the actuating lever being movable between a distancing position, corresponding to the disengagement position of the insertion pin, and a nearing position, corresponding to the engagement position of the insertion pin, and that the blocking assembly may further comprise elastic action means associated with the actuating lever and adapted to push it towards the nearing position.

Thanks to this solution, the blocking assembly can be easily manoeuvred by a user of the brush cutter tool.

In particular, by simply actuating the lever between the distancing position and the nearing position (and vice versa) it is possible to obtain a rapid and effective engagement and disengagement of the insertion pin on the toothed crown.

In addition, thanks to these elastic action means, the engagement position of the insertion pin in the toothed crown is effectively maintained even during the usual jolts and/or vibrations that occur when using the brush cutter tool, making it particularly safe to use.

Still another aspect of the invention provides that the brush cutter tool may comprise a protective case associated with the cutting member, the protective case being arranged to circumferentially delimit a working area within which the cutting member rotates.

Thanks to this solution, the brush cutter tool is provided with a protective case that allows preventing grass clippings and/or stones cut/struck by the cutting device during normal grass mowing operations from moving in the direction, and possibly hitting, the user of the brush cutter tool.

A further aspect of the invention provides that said rotational drive assembly may comprise a sleeve rigidly connected to the second segment of the support arm, the second drive shaft being inserted inside the sleeve with the possibility of rotating around said rotation axis of the cutting member.

Thanks to this solution, the second drive shaft is made integral with the second segment of the support arm, while maintaining the ability to drive the rotation of the cutting member. Still, a further aspect of the invention provides that the protective case may be connected to the sleeve with the ability to rotate about an axis parallel to the rotation axis of the cutting member, and that the brush cutter tool may comprise a blocking assembly configured to prevent rotation of the support case about said rotation axis parallel to the rotation axis of the cutting member during rotation of the second segment between the first position and the second position.

Thanks to this solution, the brush cutter tool allows to keep the protective case arranged so as to protect the user of the brush cutter tool even when the second segment is arranged in the second position.

In other words, the blocking assembly makes it possible to keep the position of the protective case unchanged whatever the position assumed by the cutting member so as to protect the user of the brush cutter tool in any case.

Another aspect of the invention provides that the blocking assembly may comprise a rocker arm, i.e., a rod, provided with one end hinged to the first segment with respect to a first hinge axis and an opposite end hinged to the protective case with respect to a second hinge axis that is parallel to and distinct from the first hinge axis.

Thanks to this solution, the blocking assembly is particularly simple, can be easily and quickly assembled, and is particularly cost-effective.

Still another aspect of the invention provides that the second segment may comprise a first section associated with the first segment and a second section with which the cutting member is associated and which is rotatably associated with the first section about an oscillation axis, and that the brush cutter tool may comprise an oscillation assembly configured to vary the relative angular position between the first section and the second section with respect to the oscillation axis.

Thanks to this solution, the second section can be arranged in various configurations of use according to the needs in the field, making the brush cutter tool particularly versatile. A further aspect of the invention provides that the oscillation assembly may allow an oscillation of the second section with respect to the first section between a reference position, in which the rotation axis of the cutting member lies on a vertical plane, and in an inclined position, in which the rotation axis of the cutting member is transverse to said vertical plane.

Thanks to this solution, the brush cutter tool also allows the position of the cutting member to be further varied, so that mowing operations can be carried out efficiently and quickly. Still, another aspect of the invention provides that the oscillation assembly may comprise:
- a support bar rotatably associated with the first section of the second segment of the support arm,
- a first annular support and a second annular support that are fitted on the support bar and rigidly integral with it in rotation, said first and second annular support being adapted to make available a resting surface for an abutment surface of the second section integral with the second drive shaft, and wherein the first annular support and the second annular support each have a first flat perimeter face and a second flat perimeter face, the first perimeter faces being coplanar, while the second faces are placed at a different radial distance from the rotation axis of the support bar, the support bar can be rotatable so as to achieve the reference position of the cutting member, wherein the first faces of the first annular support and of the second annular support lie on a plane parallel to the rotation axis of the second section and the resting surface for the connection casing is made available by said first faces, and to achieve the inclined position, wherein the second faces of the first annular support and of the second annular support lie on respective planes parallel to the rotation axis of the support casing and the resting surface for the connection casing is made available from the second faces.

Thanks to this solution, the oscillation assembly makes it possible to vary the orientation of the second segment simply by varying the resting surface on which the abutment surface of the second section rests.

In other words, simply by exploiting the dimensional characteristics of two annular supports, the oscillation assembly allows the orientation of the second section to be varied. The result is an oscillation assembly that is simple in construction, economical and can be quickly assembled.

A further aspect of the invention provides that the brush cutter tool may comprise an assembly for adjusting the position of the support bar configured to selectively rotate the support bar between the reference position and the inclined position and to selectively block the support bar at least in said two positions.

Thanks to this solution, the brush cutter tool can effectively control the position of the support bar and therefore the orientation of the second section and the cutting member. In addition, the adjustment assembly, by allowing the position of the support bar to be blocked, allows the position of the cutting member to be blocked, making the use of the brush cutter tool safe.

Another aspect of the invention provides that the bar position adjustment assembly may comprise:
- a second actuating lever integral with the support bar for driving the rotation thereof with respect to its rotation axis,
- a pin integral with the lever and which is derived from it towards a wall of the first section of the second segment,
and that said pin can be selectively inserted in a first seat, which is made in said wall and is positioned and shaped in such a way as to accommodate the pin to size in order to make a shape connection when the lever is in the initial position, and in a second seat, which is made in said wall and is positioned and shaped in such a way as to accommodate the pin to size in order to make a shape connection when the lever is in the inclined position.

Thanks to this solution, the support bar can be easily manoeuvred by a user of the brush cutter tool.

In particular, by simply actuating the second actuating lever, it is possible to achieve rapid and effective actuation of the support bar.

Furthermore, thanks to the pin it is possible to block the position of the support bar quickly and safely.

Still another aspect of the invention provides that the oscillation assembly may comprise a plate integral with the abutment surface, and a pin integral with the first section and inserted into a through slot formed in the plate integral with the abutment surface.

Thanks to this solution, the oscillation assembly is configured in such a way as to limit the extreme oscillation positions of the second section with respect to the first section, by means of the slot that makes available two opposite abutment surfaces for the pin, while maintaining the oscillation range of the second section with respect to the first section in a safe range for the user of the brush cutter tool.

The invention further makes available a brush cutter apparatus comprising:
- an agricultural machine provided with:
   ∘ a support frame,
   ∘ a motor installed on the support frame,
   ∘ at least one pair of wheels rotatably associated with the support frame,
- a brush cutter tool according to one or more of the aspects outlined above connected to the agricultural machine.

Thanks to this solution, the invention makes available an apparatus that makes landscaping operations particularly fast and convenient.

Another aspect of the invention provides that the cutting member of the brush cutter tool may protrude beyond maximum transverse overall dimensions of the agricultural machine when the second segment is in the second position.

Thanks to this solution, the apparatus can be moved along a direction parallel to the edge at which the grass needs to be mowed, keeping the agricultural machine at a distance from the edge, thus making landscaping operations particularly simple, convenient, quick and safe.

### Brief description of the figures

Further features and advantages of the invention will be more apparent after reading the following description provided by way of non-limiting example, with the aid of the illustrated figures in the accompanying drawings.
Figure 1 is a front view from above of an apparatus according to the invention with a first segment and a second segment of a tool in a first position.
Figure 2 is a front view from above of the apparatus of figure 1 with the first segment and the second segment of the tool in a second position.

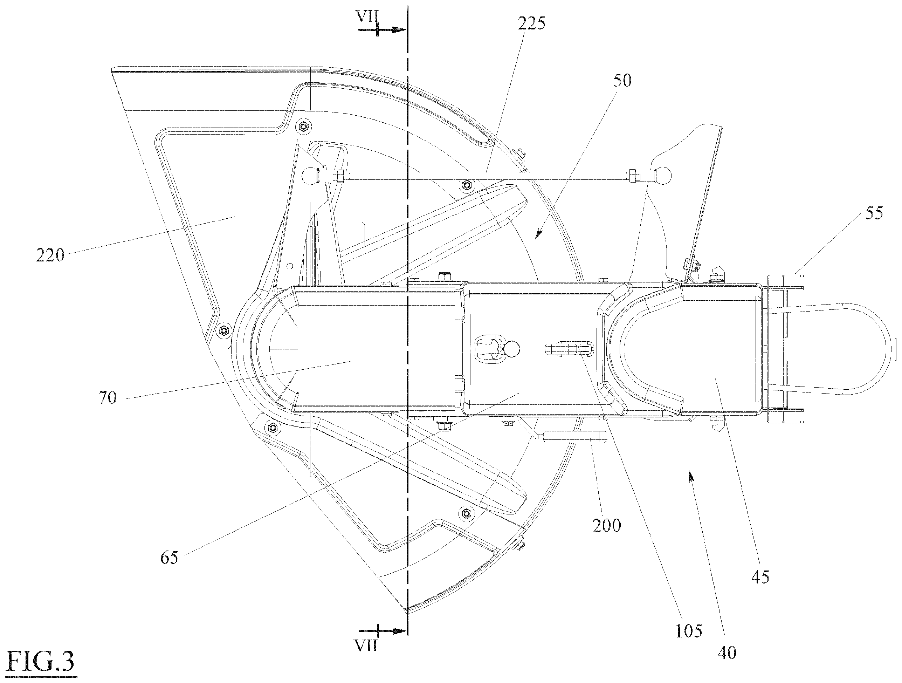

Figure 3 is a front view from above of a tool of the apparatus of figure 1.
Figure 4 is a front view from below of the tool of figure 3.
Figure 5 is a schematic section view along the line V-V of figure 4.

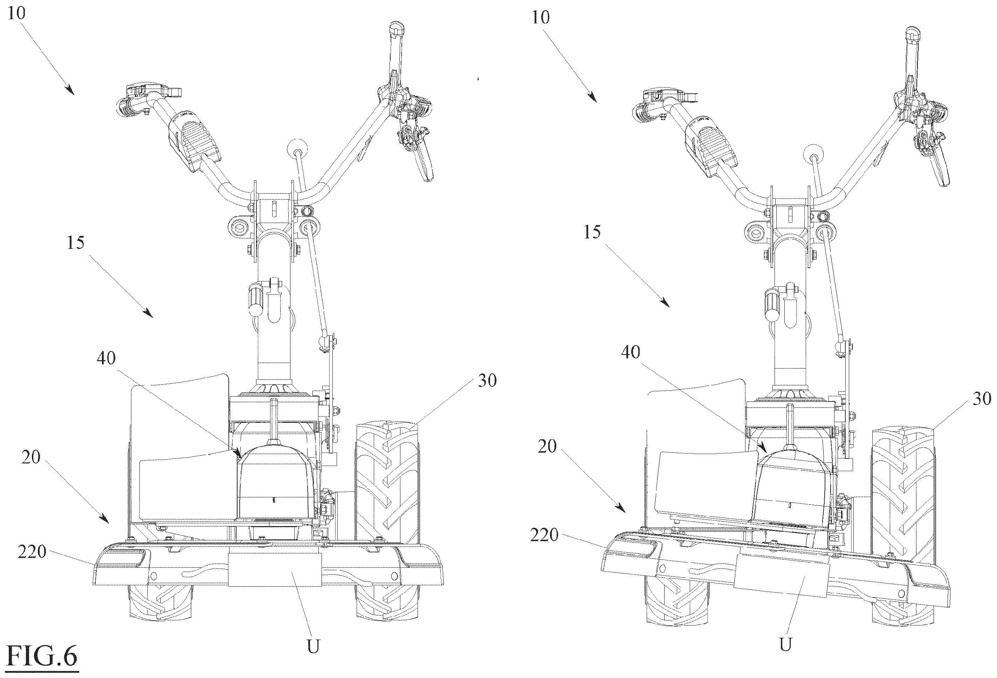

Figure 6 is a front view of the apparatus of figure 1 with the tool in a reference position on the left, and with the tool in an inclined position on the right.

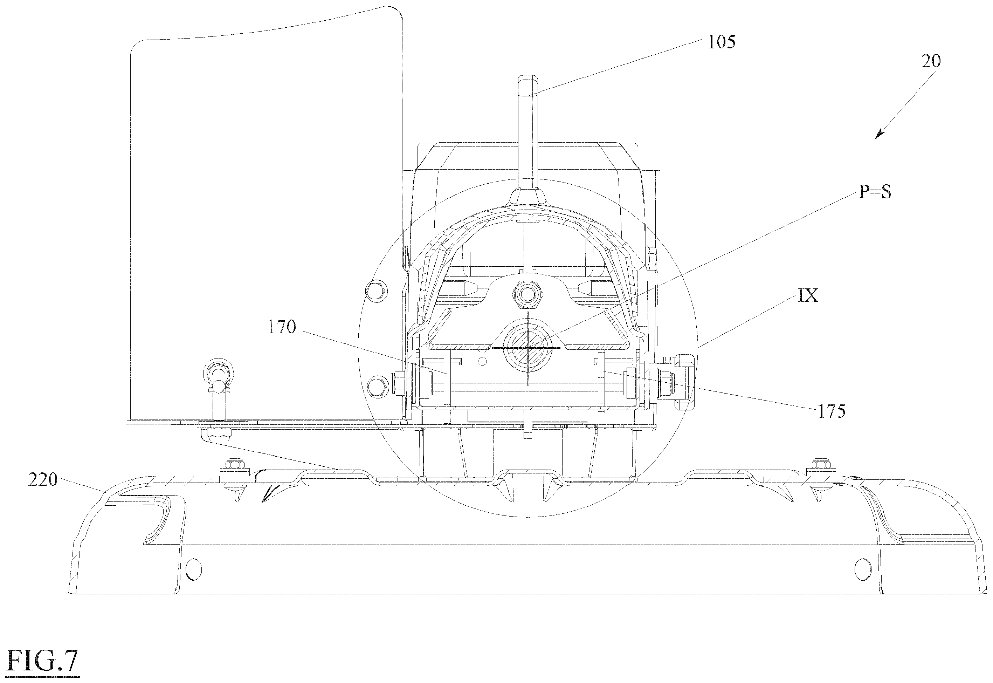

Figure 7 is a section view along the line VII-VII of figure 3 in which the tool is in the reference position.

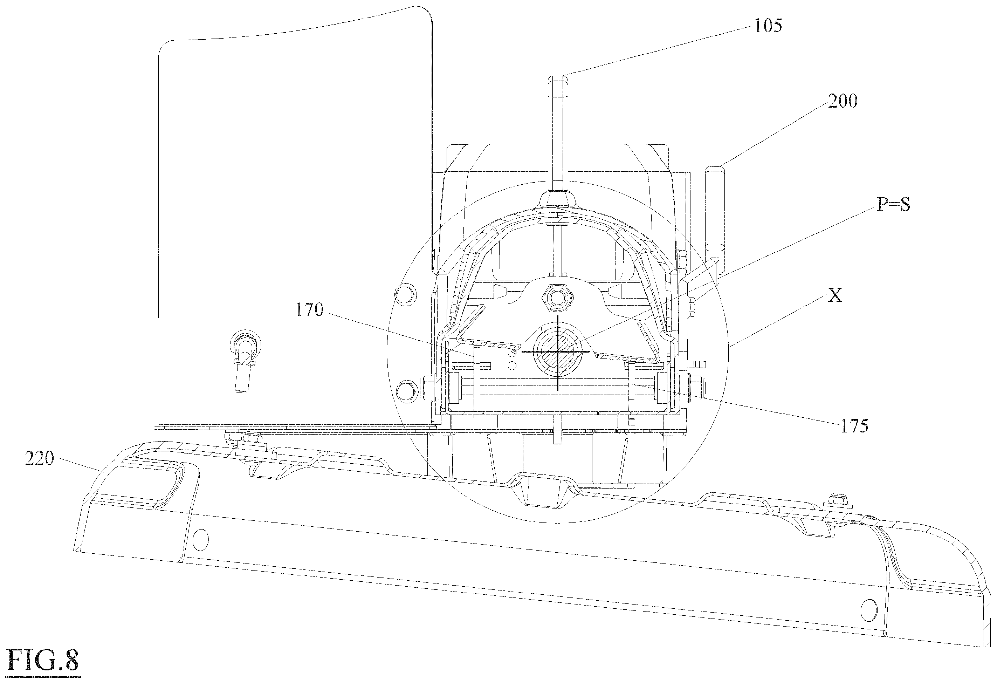

Figure 8 is a section view along the line VII-VII of figure 3 in which the tool is in the inclined position.

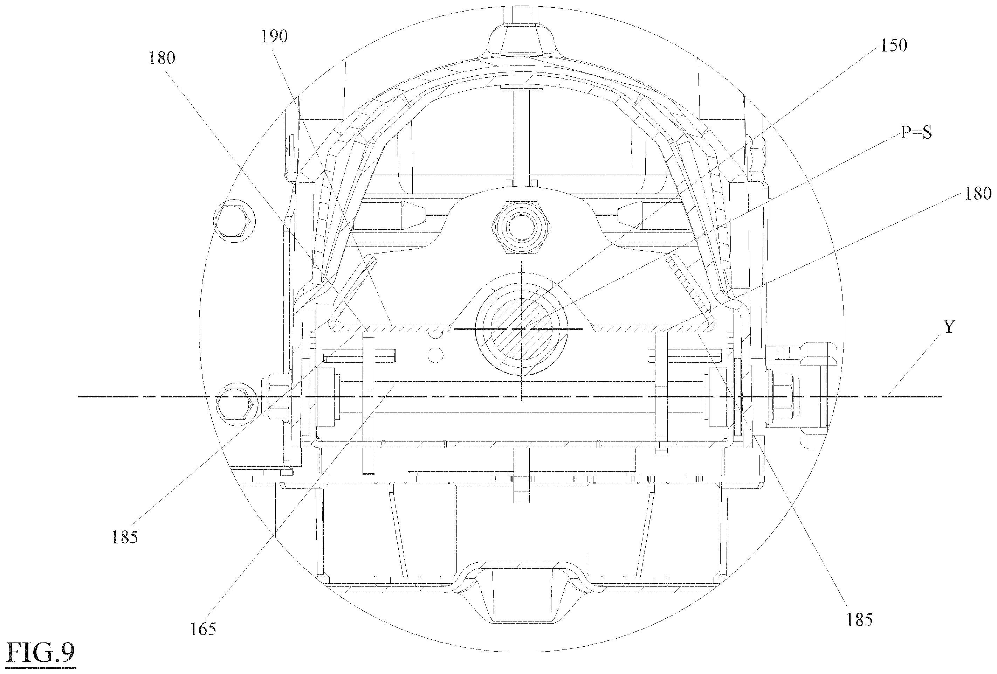

Figure 9 is an enlarged view of the portion IX of figure 7.

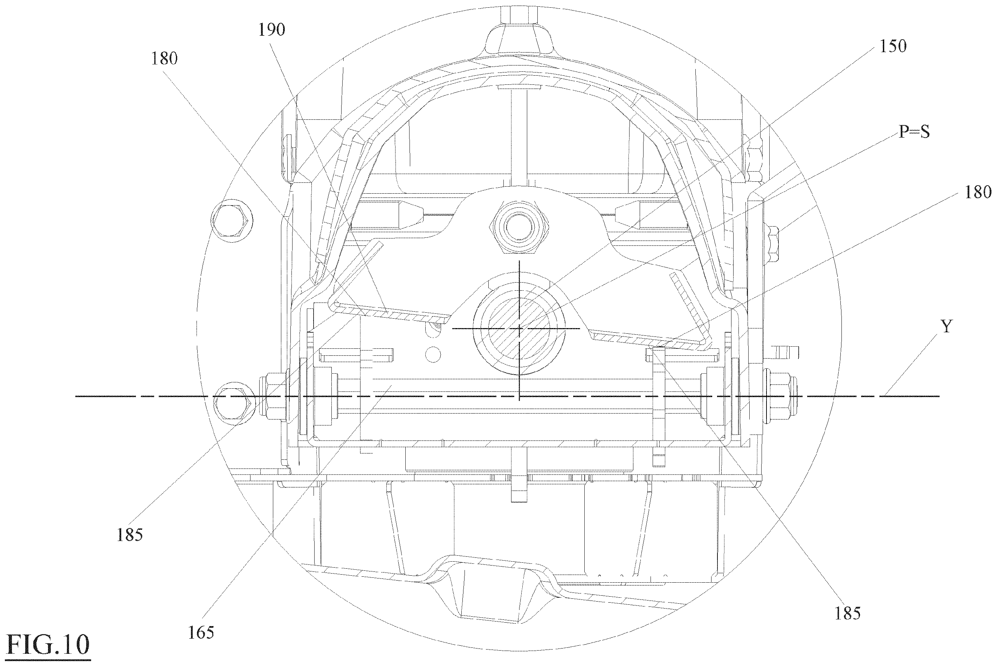

Figure 10 is an enlarged view of the portion X of figure 8.

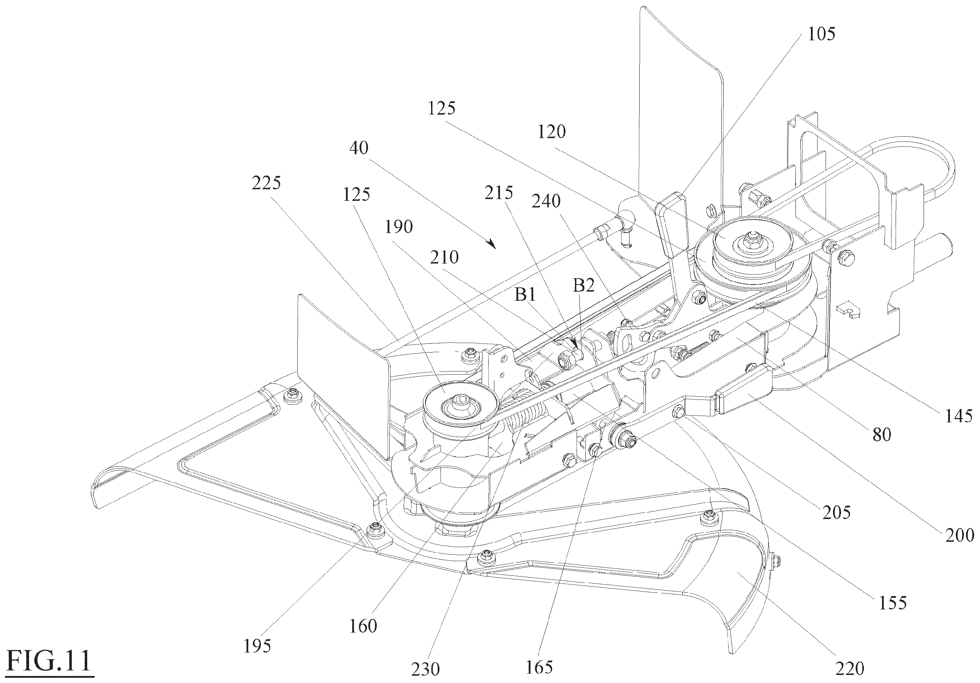

Figure 11 is an axonometric view of the tool in figure 3, in which the closing covers have been eliminated to show various elements of the tool.

### Detailed description

With particular reference to such figures, an apparatus has been globally indicated by 10, for example a landscaping apparatus 10, in particular a brush cutter apparatus 10 configured to perform landscaping operations, for example, turf mowing operations.

The apparatus 10 comprises an agricultural machine 15, in particular configured to allow at least one tool 20 to be removably connected to the agricultural machine 15, for example for working the soil or for landscaping.

The tool 20 is driven by mechanical energy, in particular a torque, generated by the agricultural machine 15.

The agricultural machine 15 comprises a support frame, a motor (not illustrated) installed on the support frame, and at least one pair of drive wheels 30 including a left wheel and a right wheel, i.e., a left wheel located on a left sidewall of the agricultural machine 15 and a right wheel located on a right sidewall of the agricultural machine 15, which are rotatably associated with the support frame, for example (only) with respect to substantially coaxial rotation axes, and which receive a drive torque from the motor.

In this discussion, the terms "lower" and "upper" refer respectively to the proximal portion and the distal portion of the considered element, to the resting ground of the agricultural machine 15. The term "vertical" indicates a component arranged substantially perpendicular to the resting ground.

The term "horizontal" indicates a component arranged substantially parallel to the resting ground. Furthermore, the terms "front" and "rear" are to be interpreted according to the normal forward direction (not reverse) of the agricultural machine 15.

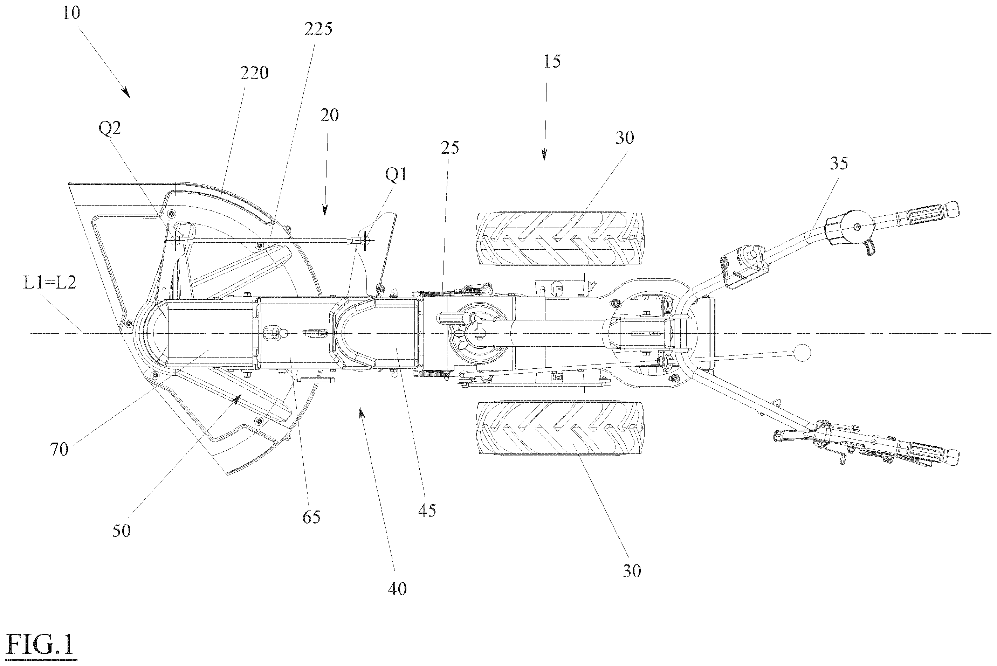

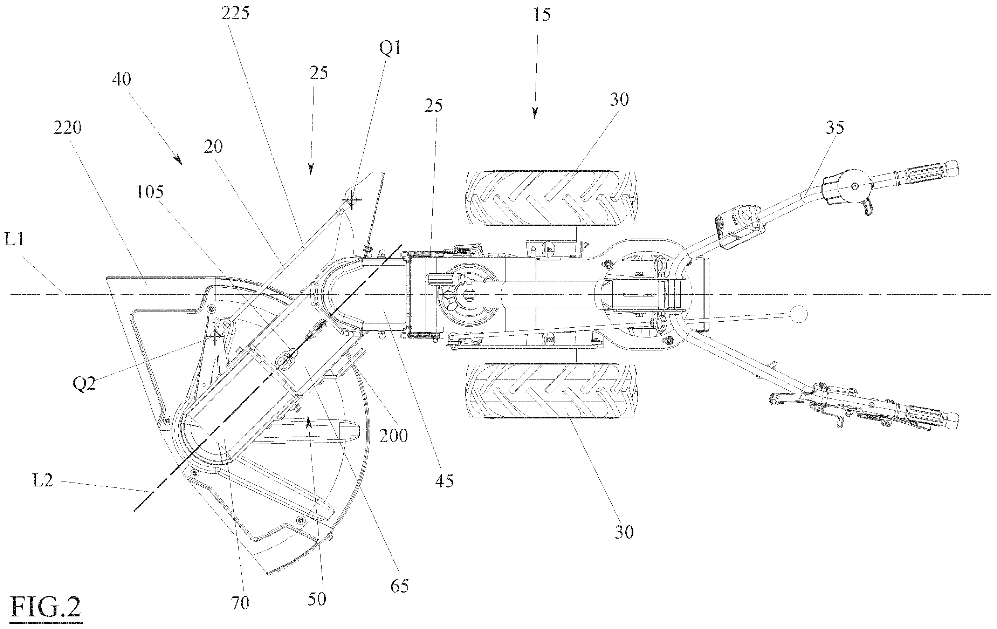

Furthermore, the terms "left" and "right" are to be interpreted on the basis of a plan view such as that in figures 1 and 2 and on the basis of the normal forward direction of the agricultural machine 15.

The agricultural machine 15 has a longitudinal (essentially horizontal) axis, which is for example parallel to a normal forward direction (not in steering conditions) of the agricultural machine 15.

The axes of rotation of the wheels 30 are substantially perpendicular to the longitudinal axis of the agricultural machine 15 (and are also horizontal).

The agricultural machine 15 comprises an output shaft (not visible in the figures as it is covered by a protective case) adapted to be mechanically connected to the tool in order to transmit to it the torque necessary to actuate the tool.

This output shaft may be in the form of a power take-off or, as in the illustrated embodiment, of a shaft with which a drive pulley (or a toothed wheel) is rigidly integral in rotation. In the preferred embodiment illustrated in the figures, the agricultural machine 15 10 is a walking tractor.

In particular, it is provided only with the pair of wheels 30, which can be both drive wheels and, for example, independent in rotation of each other.

The walking tractor comprises a handlebar 35 (for example provided with a pair of diverging handlebars 90), preferably hinged to the support frame (with respect to a substantially vertical rotation axis), to govern the directionality of the walking tractor and on which a plurality of commands (buttons and levers) are placed that allow to control the actuation of the motor, the advancement and the actuation of the tool 20.

These commands will not be further described as they are known to those skilled in the art.

For the typical dimensions of a walking tractor, the maximum transverse overall dimensions of the handlebar 35 in a direction perpendicular to the longitudinal axis of the agricultural machine 15 (i.e. along a direction parallel to the axes of rotation of the wheels 30) are equal to or greater than the maximum transverse overall dimensions defined along the same transverse direction by the pair of wheels 30.

In particular, the handlebars 35 can protrude laterally both to the right and to the left with respect to the pair of wheels 30.

In the case of hinged handlebars 35, these overall dimensions are to be taken into account when the walking tractor advances along the normal forward direction and is therefore in a steering angle position equal to zero.

When the handlebars 35 is rotated to perform a steering manoeuvre it could protrude with respect to the overall dimensions of the wheels 30 only on the left or only on the right.

The support frame of the agricultural machine 15, i.e. the walking tractor, and, for example, the protective cases associated therewith, have smaller transverse overall dimensions than the handlebar 35.

In other words, the handlebar 35 is, in the illustrated embodiment, the element of the walking tractor with the largest transverse overall dimensions of all the elements of the walking tractor.

However, it cannot be ruled out that in an alternative embodiment not illustrated, it may be the pair of wheels 30 that altogether has the largest transverse overall dimensions of all the elements of the walking tractor.

The working apparatus 10 further comprises, as anticipated above, a tool 20 actuated by the output shaft of the agricultural machine 15, i.e. the walking tractor.

In the illustrated embodiment, the tool 20 is a landscaping tool 20, in particular a brush cutter tool 20 adapted to be connected to the agricultural machine 15 and configured to operate for mowing the turf.

Notwithstanding the embodiment illustrated, it will become clear in the following that the special characteristics described below can also be applied to other types of tools, such as milling cutters, grinding wheels, drills, augers or in any case any tool 20 provided with a working member suitable for being set in rotation with respect to a rotation axis in order to perform the work for which it was designed (such as drill bits, grinding wheel discs, milling cylinders, drill bits, etc.)

The tool 20 therefore comprises a working member (not illustrated), in particular in the illustrated case of the brush cutter tool 20 the working member is a cutting member U, which allows said mowing to be carried out and which, as anticipated above, is driven in rotation by means of the torque transmitted by the agricultural machine 15 in the manner that will appear more clearly below.

The cutting member U can for example be a blade or a wire wound on a spool, as known to the skilled in the art.

For example, the cutting tool 20 (or tool 20 for cutting) may comprise a central body carrying a plurality of flexible cutting filaments (not illustrated as known per se), which protrude radially from the central body outwards.

The brush cutter tool 20 comprises, first of all, a support arm 40 adapted to be connected to the agricultural machine 15.

In particular, the support arm 40 has a first longitudinal end by means of which it is connected to the agricultural machine 15 and an opposite second longitudinal end at which the cutting member U is arranged.

In detail, the support arm 40 comprises a first segment 45, which makes available said first longitudinal end of the support arm 40, and a second segment 50 which makes available said second longitudinal end of the support arm 40.

The first segment 45 may have a rigid base frame T1, i.e. not deformable under normal working loads to which it is subjected, for example made of metal.

The first segment 45 may take the form of a first tubular body, for example with a quadrangular section, defining a through channel.

In fact, in the embodiment illustrated, the base frame T1 is substantially U shaped, i.e. it has a base section (rectilinear and substantially flat) which substantially defines the base of the first tubular body and two opposite lateral sections which are derived (vertically and upwards) from the base section, substantially squared therewith, and define opposite lateral faces of the first tubular body.

Again, the first segment 45 may comprise a cover adapted to occlude the base frame T1 in a position opposite to the base section, so as to occlude superiorly the through channel defined by the first tubular body, i.e. by its base frame T1.

The first segment 45 is removably connected to the agricultural machine 15, i.e. to its support frame, by means of fixing means (at least in part placed at the first longitudinal end of the arm).

Such fixing means preferably allow the arm to be fixed to the agricultural machine 15 without residual degrees of freedom between the first longitudinal end and a portion of the frame of the agricultural machine 15 directly in contact with the arm.

By way of example only, such fixing means may comprise snap-fitting means 55 and elastic retaining means.

For example, said snap-fitting means 55 may comprise a pair of opposite forks made on the first segment 45 of the support arm 40, for example which are derived from the lateral faces of the first tubular body, and receiving seats made in the support frame of the agricultural machine 15 each of which is adapted to accommodate snap-fittingly a respective one of said forks.

Said elastic retaining means may comprise a pair of elastic traction springs, each having an end associated (coupled) with the support frame of the agricultural machine 15 and an opposite end associated with the first segment 45 of the support arm 40, for example coupled in a respective ear made on the first segment 45 and which, for example, is laterally derived from a respective lateral face of the first tubular body.

The first segment 45 has along its own longitudinal axis L1, for example substantially horizontal, an end connected to the support frame as described above and an opposite free end substantially aligned with each other along said longitudinal axis of the first segment 45.

The longitudinal axis of the first segment is preferably parallel to the longitudinal axis of the agricultural machine. In detail, the longitudinal axis of the first segment lies on a vertical centreline plane of the agricultural machine on which the longitudinal axis of the agricultural machine also lies. This vertical centreline plane is substantially placed at equal distance from the left wheel and the right wheel.

The second segment 50 has along its own longitudinal axis L2, for example substantially horizontal, a first axial end connected to the free end of the first segment 45 and an opposite second axial end aligned with the first axial end along the longitudinal axis L2 and at which the working member, i.e. the cutting member U, is arranged.

The second segment 50 is movably connected to the first segment 45, in detail it is rotatably associated therewith.

In particular, the second segment 50, for example by means of said first longitudinal axial end, is hinged to the first segment 45 (i.e. to said free end thereof), with respect to at least one hinge axis C, for example substantially vertical and preferably also transverse (for example orthogonal) to the longitudinal axes L1,L2 of the first segment 45 and of the second segment 50.

Further, the second segment 50 is connected to the first segment 45 with a possibility of rotating between a first position in which the longitudinal axes L1,L2 of the first segment 45 and of the second segment 50 lie on parallel vertical lying planes or between which a first angle (of non-zero value) is defined, and at least a second position in which the longitudinal axes L1,L2 of the first segment 45 and of the second segment 50 lie on vertical lying planes between which a second non-zero angle and/or greater than the first angle is defined.

The rotation about the hinge axis C is preferably the only degree of freedom present between the first segment 45 and the first axial end of the second segment 50.

A possible constructional embodiment which makes available the hinging of the second segment 50 to the first segment 45 will be illustrated in detail below.

In detail, the second segment 50 comprises a first section 65, which makes available said first axial longitudinal end of the second segment 50, and a second section 70 which makes available said second axial longitudinal end of the second segment 50 at which the cutting member U is arranged.

The first section 65 and the second section 70 of the second segment 50 are integral in rotation about said hinge axis C with respect to the first segment 45.

Furthermore, the rotation about the hinge axis C is preferably the only degree of freedom present between the first section 65 of the second segment 50 and the first segment 45. The first section 65 may have a respective rigid base frame T2, that is, not deformable under the normal work loads to which it is subjected, for example made of metallic material.

The base frame T2 of the first section of the second segment 50 is therefore hinged with respect to the hinge axis C to the base frame T1 of the first segment 45.

The first section may take the form of a second tubular body, for example with a quadrangular section, defining a second through channel.

In particular, the base frame T2 of the first section 65 may be substantially U-shaped, i.e. having a base section (rectilinear and substantially planar) which substantially defines the base of the second tubular body and two opposite lateral sections deriving (vertically and upwards) from the base section, substantially squared therewith, and defining opposite lateral faces of the second tubular body.

Again, the first section 65 can comprise a cover selectively adapted to occlude the base frame in a position opposite to the base section, so as to occlude superiorly the through channel defined by the first section 65 of the second segment 50.

The second section 70 may comprise and may have a respective rigid base frame T3, that is, not deformable under the normal work loads to which it is subjected, for example made of metallic material.

The base frame T3 of the second section 70 is made independent of the base frame T2 of the first section 65 and is connected thereto in the manner illustrated below.

In the same way as the first section 65, the second section 70 may be in the form of a tubular body, in particular a third tubular body, for example with a quadrangular section and, defining a third through channel.

In particular, the base frame T3 of the second section 70 is substantially U-shaped, i.e. it has a base section (straight and substantially planar) which substantially defines the base of the third tubular body and two opposite lateral sections deriving (vertically and upwards) from the base section, substantially squared therewith, and define opposite lateral faces of the third tubular body.

Furthermore, the second section 70 can comprise a respective cover selectively adapted to occlude the base frame in a position opposite to the base section so as to occlude superiorly the third through channel defined by the second section 70 of the second segment 50.

As mentioned above, the second segment 50, by hinging the first section 65 to the first segment 45, can therefore rotate about said hinge axis C.

More specifically, the tool 20 may comprise a sleeve coaxial to the hinge axis C and rigidly fixed (i.e. fixed without residual degrees of freedom) to the first segment 45, for example to the base frame T1 of the first segment 45.

In particular, the first sleeve 75 has a longitudinal central axis coaxial to the hinge axis C and is fixed to the first segment 45 arranged with said longitudinal central axis transverse, for example orthogonal, to the longitudinal axis L1 of the first segment 45, i.e. arranged with said longitudinal central axis which is substantially vertical.

For example, the first sleeve 75 is cylindrical and axially hollow.

The first section 65 of the second segment 50 of the support arm 40, has a flanging, i.e. a cylindrical jacket 80, which circumferentially embraces the first cylindrical sleeve 75 so as to thus form the hinge between the first segment 45 and the second segment 50.

In the illustrated embodiment, the (flanging, i.e., said) cylindrical jacket 80 is derived from the base frame T2 of the first section 65 and is preferably made in a monolithic body therewith.

A pair of bushings, which are interposed between an inner cylindrical surface of the cylindrical jacket 80 and an outer cylindrical surface of the first sleeve 75 may be associated with the cylindrical jacket 80, so as to allow the second segment 50 to rotate about the first sleeve 75 with reduced (substantially absent) friction.

The brush cutter tool 20 then comprises a rotation blocking assembly of the second segment 50 with respect to the first segment 45 configured to selectively block the relative rotation with respect to the hinge axis C between the first segment 45 and the second segment 50, at least in the first position and in the second position, and to selectively allow a free rotation between the first segment 45 and the second segment 50.

The blocking assembly comprises, first of all, a toothed crown 85 associated with one between the first segment 45 and the second segment 50, in particular an angular section of toothed crown 85 associated with one between the first segment 45 and the second segment 50.

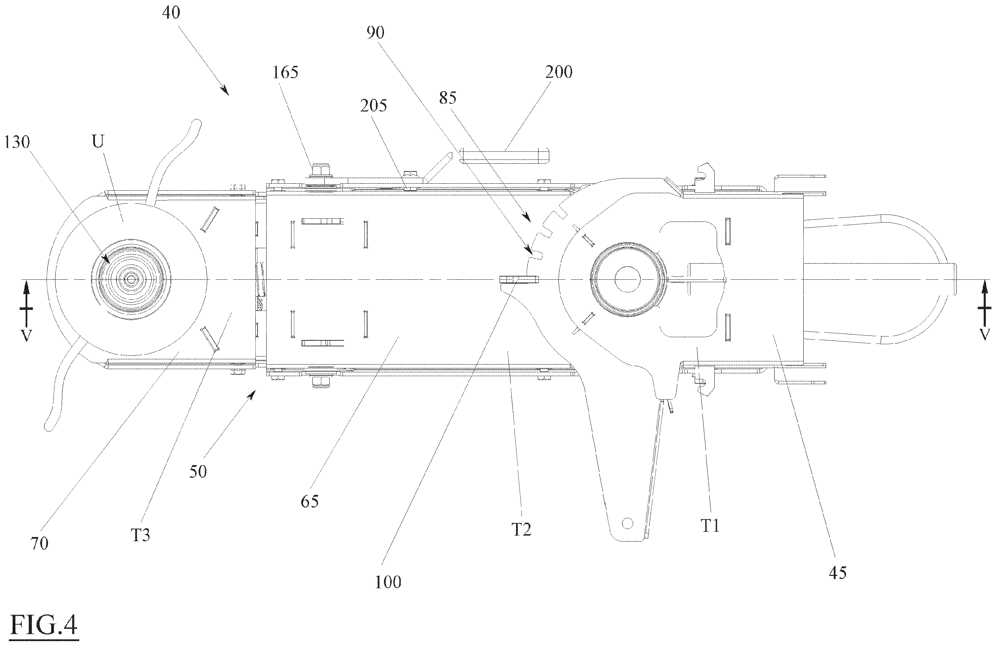

For example, as can be seen in figure 4, the toothed crown 85 is rigidly fixed (i.e. fixed without residual degrees of freedom) to the first segment 45.

The toothed crown 85 has a plurality of notches, angularly spaced apart along the circumferential development of the toothed crown 85, and a plurality of grooves 90 each defined between a respective pair of consecutive notches along the circumferential development of the toothed crown 85.

The fixing assembly further comprises an insertion pin 100 associated with the other one between the first segment 45 and the second segment 50, for example associated with the second segment 50, particularly with the first section 65 of the second segment 50.

In particular, the insertion pin 100 is operable between an engagement position in which it is constrained by shape coupling to the toothed crown 85 and prevents rotation of the second segment 50 with respect to the first segment 45, and a disengagement position in which it is released from the toothed crown 85 and allows rotation of the second segment 50 with respect to the first segment 45.

In other words, in the engagement position the insertion pin 100 is selectively inserted into one of the grooves 90 defined between the notches of the toothed crown 85 defining a shape coupling with the toothed crown 85 which prevents any rotation of the second segment 50 with respect to the first segment 45.

In particular, each groove 90 is arranged in a respective angular position along the circumference of the toothed crown 85 that is different from the other grooves 90.

The coupling of the insertion pin 100 with each of the grooves 90 therefore defines a different second position of the second segment 50 with respect to the first segment 45. That is, depending on the groove 90 in which the insertion pin 100 is inserted, there is a different second angle defined between the longitudinal axes L1,L2 of the first segment 45 and of the second segment 50.

In the disengagement position, the insertion pin 100 is moved away from the toothed crown 85, that is, it does not in any way make contact with it, and the second segment 50 is free to rotate with respect to the second segment 50.

The blocking assembly also comprises an actuating lever 105 integral with the insertion pin 100 and configured to move the same between the engagement position and the disengagement position.

In particular, the actuating lever 105 is hinged to one between the first segment 45 and the second segment 50.

For example, in the illustrated embodiment where the crown is fixed to the first segment 45, the actuating lever 105 is hinged to the second segment 50, with respect to a substantially horizontal hinging axis and orthogonal to the longitudinal axis L2 of the second segment 50.

In detail, the actuating lever 105 can be hinged to the first section 65 of the second segment 50, internally to the second through channel defined by it, by means of a support bracket 110 which is derived cantilevered and substantially squared from the first section 65 of the base frame T2 of the second tubular body of the first segment 45, and which has a slot for receiving a fixing pin connecting the actuating lever 105 which defines said hinging axis for the actuating lever 105.

In particular, the actuating lever 105 has an upper end, arranged externally to the second tubular body defined by the first section 65 of the second segment 50, at which a gripping handle may be arranged.

The actuating lever 105 then has an opposite lower end to which the insertion pin 100 is rigidly fixed (i.e., fixed without residual degrees of freedom).

The actuating lever 105 is movable, about said hinging axis, between a distancing position, corresponding to the disengagement position of the insertion pin 100, wherein the lower end of the actuating lever 105 is distal from the toothed crown 85, and a nearing position, corresponding to the engagement position of the insertion pin 100, wherein the lower end of the actuating lever 105 is proximal to the toothed crown 85.

The blocking assembly further comprising elastic action means associated with the actuating lever 105 and adapted to automatically push the same towards the nearing position. Such elastic action means comprise, for example, an elastic traction spring provided with an end coupled near the toothed crown 85, for example connected to the support bracket 110 in a position proximal to the toothed crown 85, and with an opposite end, distal from the toothed crown 85, associated (coupled) with the actuating lever 105 at the lower end thereof.

The actuating lever 105 is therefore movable towards (and in) the distancing position in contrast to the elastic force of the traction spring, which otherwise tends to push the actuating lever 105 towards (and in) the nearing position.

The cutting member U, as anticipated, is associated with the second segment 50 and arranged at the second axial longitudinal end thereof made available by the second section 70.

The brush cutter tool 20 comprises a rotational drive assembly of the cutting member U, which allows the motion imposed by the power take-off of the agricultural machine 15 to be transmitted to the cutting member U.

The drive assembly makes it possible, in particular, to actuate the cutting device U both when the second segment 50 is in the first position and when the second segment 50 is in the second position, i.e. in any of the second positions.

In particular, the drive assembly is configured to transmit said motion imposed on the cutting member U so as to actuate the same with respect to a rotation axis orthogonal to the longitudinal axis L2 of the second segment 50.

The drive assembly comprising, first of all a first drive shaft 115 rotatably associated with the first segment 45 with respect to a first rotation axis R1, for example substantially vertical and transverse (e.g. orthogonal) to the longitudinal axis L1 of the first segment 45. The first rotation axis R1 is parallel to the hinge axis C, preferably coincident (coaxial) with it, around which the second segment 50 rotates with respect to the first segment 45. In particular, the first drive shaft 115 can be rotatably inserted inside the first sleeve 75 fixed to the first segment 45, maintaining a single rotational degree of freedom around the first rotation axis R1 with respect to said first sleeve 75.

In detail, the first drive shaft 115 is inserted inside the first sleeve 75 with interposition of rolling elements, for example ball bearings, which allow the first drive shaft 115 to rotate inside the first sleeve 75.

More precisely, the first drive shaft 115 can be coaxially inserted inside the first sleeve 75, with the first rotation axis R1 therefore coinciding with the longitudinal central axis of the first sleeve 75, that is coinciding with the hinge axis C between the second segment 50 and the first segment 45.

A return pulley 120 or toothed return wheel and a first pulley 125 or first toothed wheel are keyed onto the first drive shaft 115, i.e. connected and integral in rotation.

The return pulley 120 is adapted to be connected to the power take-off of the agricultural machine 15.

For example, the return pulley 120 is connected to the drive pulley connected to the output shaft of the agricultural machine 15 by means of a flexible transmission member 145, for example a belt or chain, which transmits the rotary motion of the output shaft to the return pulley 120 (and thus also to the first drive shaft 115 and to the first pulley 125).

The drive assembly then comprises a second drive shaft 130 to which the cutting member U is associated (integral) in rotation, for example it is associated (integral) with a lower end of the second drive shaft 130.

The second drive shaft 130 is rotatably associated with the second segment 50 with respect to a second rotation axis R2, which is distinct and spaced out by a non-zero amount from the first rotation axis R1 (and aligned with the first shaft along the longitudinal axis L2 of the second segment 50).

In the embodiment illustrated, the second rotation axis R2 is parallel to the first rotation axis R1.

In particular, the second drive shaft 130 is associated with the second section 70 of the second segment 50.

More in detail, the second segment 50 can comprise a second sleeve 135, which is axially hollow and for example cylindrical, rigidly fixed (i.e. fixed without residual degrees of freedom) to the second section 70, for example to the base frame T3 of the second section 70.

In particular, the second sleeve 135 has a longitudinal central axis and is fixed to the second section, inside the third through channel defined by it, arranged with said longitudinal central axis transverse, for example orthogonal, to the longitudinal axis L2 of the second segment 50.

The second drive shaft 130 may be inserted within the second sleeve 135 fixed to the second section 70 of the second segment 50, maintaining a single rotational degree of freedom with respect to said second rotation axis R2.

In detail, the second drive shaft 130 is inserted inside the second sleeve 135 with interposition of rolling elements, for example ball bearings, which allow the second drive shaft 130 to rotate inside the second sleeve 135.

The first drive shaft 115 and the second drive shaft 130 are mechanically connected in rotation.

In particular, a second pulley 140 or toothed wheel connected in rotation to the first pulley 125 by means of a flexible connection member closed in a ring is keyed to the second drive shaft 130 (that is fixed and integral in rotation).

In particular, the second drive shaft 130 has an upper end which is arranged within the third through channel defined by the third tubular body of the second section 70 of the second segment 50, to which said second pulley 140 is keyed, and an opposite lower end which protrudes inferiorly beyond the first section 65 of the base frame T3 of the third tubular body, and is arranged externally to the third tubular body, to which the cutting member U is connected (and integral in rotation).

Returning to the conformation of the second segment 50, the second section 70 is connected to the first section 65 with the possibility of oscillating about an oscillation axis P parallel to the longitudinal axis L2 of the second segment 50, that is transverse, for example orthogonal, to the second rotation axis R2.

In particular, the cutting element U is integral with the second section 70 in the oscillation with respect to said oscillation axis P.

In other words, the second section 70 rotating about said oscillation axis P, by means of the second sleeve 135 rotates with itself the second drive shaft 130 and therefore the cutting member U connected thereto.

More precisely, the second section 70 rotates with respect to the first section 65 about said oscillation axis P by means of a (single) oscillation pin 150 defining said oscillation axis P.

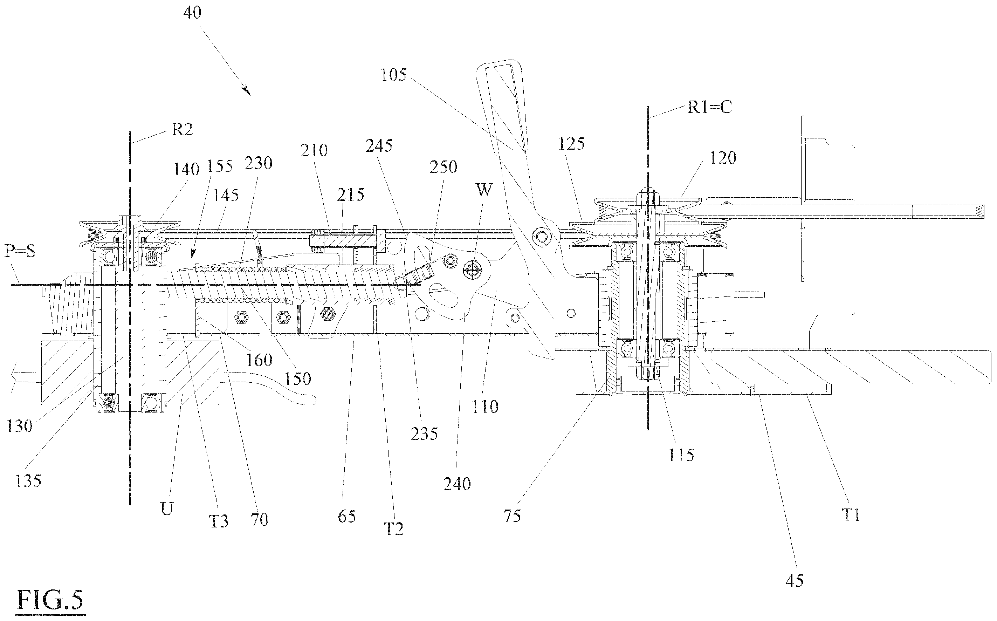

In detail, as better visible in figure 5, the first section 65 of the second segment 50 can comprise a third sleeve 155, which is axially hollow and for example cylindrical, rigidly fixed (i.e. fixed without residual degrees of freedom) to the first section 65, for example to the base frame T2 of the first section 65.

In particular, the third sleeve 155 has a longitudinal central axis and is fixed to the first section 65, within the second through channel defined by it, arranged with said longitudinal central axis parallel to the longitudinal axis L2 of the second segment 50.

The second section 70 then has a receiving seat facing the third sleeve 155 and coaxial thereto.

Said receiving seat is defined for example, by a through hole made in a connection plate 160 rigidly fixed to the base frame T3 of the second section 70. For example, such a connection plate 160 is arranged within the third through channel defined by the second section 70 of the second segment 50 and rises upwards, squarely, from the first section 65 of the base frame T3 of the second section 70.

The brush cutter tool 20, i.e. the oscillation assembly comprises said oscillation pin 150, the third sleeve 155 and the receiving seat made in the third section. The oscillation pin 150 is inserted coaxially and, substantially to size, inside the third sleeve 155 made in the first section 65 and also inserted, and substantially to size, inside the receiving seat made in the second section 70.

Furthermore, the oscillation assembly is configured to oscillate the second section 70 with respect to the first section 65 selectively between a reference position, in which the rotation axis of the cutting member U lies on a vertical plane, and an inclined position, in which the rotation axis of the cutting member U is transverse to said vertical plane.

The oscillation assembly comprises first of all a straight and rigid support bar 165, i.e. not deformable under the usual loads for which it is intended, which is arranged with its own central longitudinal axis Y lying on a plane perpendicular to the first rotation axis R1 and transverse, e.g. orthogonal, to the longitudinal axis L2 of the second segment 50 and transverse.

Further, this longitudinal axis is substantially horizontal.

The support bar 165 is hinged to the first section 65 of the second segment 50, i.e. by the base frame T2 of the first section 65 of the second segment 50, with respect to a rotation axis parallel (and coincident) to its own longitudinal central axis Y.

In particular, the support bar 165 can have opposite axial ends, each of which is inserted in a suitable receiving slot, made in a respective second section 70 of the base frame T2 of the first section 65 of the second segment 50.

Each end of the support bar 165 may therefore protrude beyond the slot, resulting external to the second through channel of the first section 65, and have a thread that allows the screwing of a blocking nut that prevents the axial extraction of the support bar 165 from the slot.

The support bar 165 is therefore inserted inside said slots with the possibility of rotating on itself around its own longitudinal central axis Y.

The oscillation assembly then comprises a first annular support 170, for example a first cam 240, and a second annular support 175, for example a second cam 240, which are fitted on the support bar 165 and rigidly fixed thereto, or fixed with no residual degrees of freedom to the support bar 165.

The first annular support 170 and the second annular support 175 are therefore rotationally integral (without angular shifts between them) to the support bar 165 around the longitudinal central axis Y of the support bar 165.

More in detail, the first annular support 170 and the second annular support 175 are arranged along the support bar 165 at a non-zero distance from each other along a direction parallel to the longitudinal central axis Y of the support bar 165 and are placed on opposite sides of the support bar 165 with respect to a vertical plane containing the oscillation axis P.

Each annular support has (in a respective perimeter contact profile or even cam profile) a first flat perimeter face, and a second preferably flat perimeter face angularly spaced from the first perimeter face with respect to the longitudinal axis of the support bar 165.

The first perimeter faces of the first annular support 170 and of the second annular support 175 are mutually coplanar, i.e. they are placed at the same radial distance from the longitudinal central axis Y of the support bar 165, while the second faces are placed at a different radial distance from the longitudinal central axis of the support bar 165.

For example, the second perimeter faces lie on parallel planes spaced out by a non-zero distance. However, it is not excluded that the second faces may lie on a single plane inclined with respect to the longitudinal axis of the support bar 165.

Said first and second annular support 175 are adapted to make a resting surface 180 available for a (flat) abutment surface 185 of the oscillation assembly made in the second section 70 and integral in oscillation around the oscillation axis P.

The abutment surface 185 is held in contact with the first annular support 170 and with the second annular support 175, i.e. with the first faces or with the second faces according to the rotation of the support bar 165, by means of a potential force.

Such potential force may be the weight force of a body making the abutment surface 185 available and/or an elastic element configured to push the abutment surface 185 against the first and second annular support 175. This body is, as will become clear below, the base frame T3 of the second section 70 of the second segment 50.

In particular, this abutment surface 185 of the oscillation assembly is rigidly integral with the base frame T3 of the second section 70 in the oscillation about the oscillation axis P. For example, the second section 70 may have a flange 190 fixed without residual degrees of freedom to the base frame T3 of the third tubular body, which is adapted to make available said abutment surface 185 of the second section 70 of the second segment 50 adapted for rest in abutment on said abutment surface 185 made available by the first annular support 170 and by the second annular support 175.

For example, said flange 190 can be made as a monolithic body with the base frame T3 of the second section 70 of the second segment 50.

In particular, said flange 190 may comprise two opposite and parallel lateral segments that are derived from the first base section 65 along a direction parallel to the longitudinal axis L2 of the second segment 50 (i.e., parallel to the oscillation axis P of the second section 70), and an accessory segment 195 that acts as a bridge between the lateral segments, that is it connects the lateral segments and is orthogonal thereto.

Each lateral segment of the flange 190 has a flat base surface which is turned and faces the first section 65 of the base frame T3 of the second tubular body defined by the first section 65 of the second segment 50, and said base surfaces are mutually coplanar and adapted to make available said abutment surface 185 of the second section 70.

Regardless of the exact architecture that makes the abutment surface 185 available, it is flat, as already mentioned, and lies on a plane perpendicular to the second rotation axis R2, in addition to being integral with said second rotation axis R2 in rotation with respect to the oscillation axis P.

The support bar 165 is, therefore, actuatable in rotation about its longitudinal central axis Y between a primary position, corresponding to the reference position of the second section 70 (i.e. of the cutting member U) and a secondary position, corresponding to the inclined position of the second section 70 (i.e. of the cutting member U).

In particular, in the primary position of the support bar 165 the first faces of the first annular support 170 and the second annular support 175 lie on a plane parallel to the oscillation axis P of the second section 70 (and perpendicular to the first rotation axis R1, for example horizontal) and the resting surface 180 for the abutment surface 185 of the second section 70 is made available by said first faces of the first annular support 170 and of the second annular support 175.

In the secondary position of the support bar 165, the second faces of the first annular support 170 and the second annular support 175 lie in respective planes parallel to the oscillation axis of the second section 70 (and perpendicular to the first rotation axis R1, for example horizontal) and the resting surface 180 for the abutment surface 185 of the second section 70 is made available by said second faces.

As mentioned above, however, it is not excluded that said faces may be coplanar, in which case in the secondary position of the support bar 165 the second faces of the first annular support 170 and of the second annular support 175 lie on a plane parallel to the oscillation axis of the second section 70 (and inclined with respect to the first rotation axis R1) and the resting surface 180 for the abutment surface 185 of the second section 70 is made available by said second faces.

Therefore, as a consequence of the rotation of the annular supports, in the primary position the abutment surface 185 lies on a first lying plane parallel to the oscillation axis P and perpendicular to the first rotation axis R1, while in the secondary position the abutment surface 185 lies on a second lying plane parallel to the oscillation axis P and inclined with respect to the first rotation axis R1.

The first lying plane and the second lying plane define an acute angle of less than 60°, e.g. less than 45°, at their intersection.

Between the primary position and the secondary position, the support bar 165 performs a rotation around its own longitudinal central axis equal to a certain angle smaller than the rounded angle, in particular equal to the acute angle defined by the intersection between the first lying plane and the second lying plane.

The brush cutter tool 20 further comprises an assembly for adjusting the position of the support bar 165 configured to selectively rotate the support bar 165 between the primary position and the secondary position.

The adjustment assembly is further configured to selectively block the support bar 165 in at least these two positions (i.e. in the primary position and in the secondary position).

The assembly for adjusting the position of the support bar 165 comprises, first of all, a second actuating lever 200 integral (i.e. fixed without residual degrees of freedom) to the support bar 165 for actuating it in rotation with respect to its longitudinal central axis.

The second actuating lever 200 is preferably arranged externally to the second segment 50 and has an upper end at which a gripping handle may be arranged, and an opposite lower end by means of which it is rigidly fixed (i.e. fixed without residual degrees of freedom) to the support bar 165, for example at an end of the support bar 165 protruding from the first section 65 of the second segment 50.

The adjustment assembly further comprises a blocking pin 205 integral with the lever and which is derived therefrom when nearing the first section 65 of the second segment 50, for example when nearing a lateral face of the second tubular body of the first segment 45 in proximity to which the second actuating lever 200 is arranged.

The blocking pin 205 can be selectively inserted into a first seat, which is made in said lateral face of the first section 65 and is positioned and shaped in such a way as to accommodate the blocking pin 205 to size in order to make a shape connection when the second actuating lever 200 is in the primary position.

In the same way, the blocking pin 205 can be selectively inserted into a second seat, which is made in said lateral face and is positioned and shaped in such a way as to accommodate the pin to size and make a shape connection with it when the lever is in the secondary position.

The first seat and the second seat are arranged along an arc of circumference having a vertex on the longitudinal central axis of the support bar 165 (i.e. on the rotation axis of the support bar 165).

Furthermore, the first seat and the second seat are angularly spaced apart along said arc of circumference by an angle equal to the angle of rotation performed by the support bar 165 between the primary position and the secondary position.

The adjustment assembly may also comprise an abutment pin 210 integral with the first section 65 and inserted in a slot integral with the second section 70.

The slot, in particular, has a (longitudinal) development such that in the reference position of the second section 70 the abutment pin 210 is placed in contact with a first end edge B1 of the slot, while in the inclined position of the second section 70, the abutment pin 210 is placed in contact on a second end edge B2 of the slot opposite the first edge B1. In other words, the abutment pin 210 acts as an end-of-stroke element which prevents further oscillation of the second section 70 with respect to the first section 65 around the oscillation axis P.

For example, said slot is obtained through the flange 190 fixed to the base frame T3 of the second section 70 of the second segment 50, and, in particular in the accessory segment 195 of the flange 190.

The tool 20 may comprise a protective case 220 associated with the second segment 50, in particular with the second section 70 of the second segment 50, and adapted to circumferentially delimit a working area within which the cutting member U rotates.

In particular, the protective case 220 delimits a zone of the working area towards the first segment 45, so as to protect the agricultural machine 15 and the user from the working member, i.e. the cutting member U, throwing bodies.

For example, the protective case 220 comprises an upper wall, conformed as a disc sector (subtended at a lower angle of 180°), from a radially outer perimeter edge of which a circumferentially curved lateral wall develops downwards, arranged with respect to the second rotation axis R2 and provided with an inner surface having a concavity turned towards the second rotation axis R2.

This lateral wall also comprises an outer surface turned towards the first segment 45.

The protective case 220 is preferably rotatably connected to the second section 70 of the second segment 50, so that its orientation with respect to the second section 70 can change when the second segment 50 rotates with respect to the first section 65.

In the illustrated embodiment, the protective case 220 is rotatably associated with the second sleeve 135, however, it is not excluded that it may be rotatably associated with the base frame of the second section 70, according to a rotation axis parallel (coaxial) to the second rotation axis R2.

Even more preferably, the tool 20 comprises a blocking assembly (or orientation mechanism) configured to prevent rotation of the support case about said rotation axis parallel to the second rotation axis R2 during rotation of the second segment 50 between the first position and the second position.

In other words, said blocking assembly is configured in such a way that an imaginary line traceable on the protective case 220 and parallel to the longitudinal axis of the first segment 45 when the second segment 50 is in the first position of rotation with respect to the first segment 45, remains parallel to said longitudinal axis also when the second segment 50 is in the second position of rotation with respect to the first segment 45 (and in all intermediate positions).

In the embodiment illustrated, such a blocking assembly comprises an articulated quadrilateral, of which the first segment 45 (for example a flange 190 which derives externally from its base frame) is the frame of the articulated quadrilateral and the protective case is the rod opposite the frame. Preferably the articulated quadrilateral is an articulated parallelogram.

In particular, the blocking assembly comprises a rod 225 (straight and rigid, i.e. not deformable when subjected to the usual loads for which it is intended) provided with an end hinged to the first segment 45 (in an eccentric position with respect to the rotation axis of the first segment 45 with respect to the second segment 50) with respect to at least a first hinge axis Q1 (parallel to the rotation axis of the first segment 45 with respect to the second segment 50) and an opposite end hinged to the protective case 220 (in an eccentric position with respect to the second rotation axis R2) with respect to a second hinge axis Q2 parallel and distinct from the first hinge axis Q1.

In the embodiment illustrated, the ends of said rod 225 are connected to the protective case 220 and to the first segment 45 by means of respective spherical joints.

Further, the distance between the rotation axis of the second segment 50 with respect to the first segment 45 and the first hinge axis Q1 is substantially equal to the distance between the second rotation axis R2 and the second hinge axis Q2, and the distance between the second rotation axis R2 and the rotation axis of the second segment 50 with respect to the first segment 45 is substantially equal to the distance between the first hinge axis Q1 and the second hinge axis Q2.

In this way, the articulated parallelogram is realised.

As better visible in Figure 5, the tool 20 can further comprise a tensioning assembly of the flexible transmission member 145 which is at least partially wound on the first pulley 125 and on the second pulley 140.

The particular tensioning assembly described below, although referring to the brush cutter tool, can be applied to any tool provided with: a first drive shaft, a second drive shaft to which a working member is rotationally associated, a first pulley integral in rotation with the first drive shaft, a second pulley integral in rotation with the second drive shaft and a flexible transmission member at least partially wound around the first pulley and the second pulley for the transmission of a rotary motion between the two pulleys.

In particular, as will become clear later, the tensioning assembly is configured to keep the flexible transmission member 145 suitably tensioned even following its elongation/wear. The tensioning assembly is, in particular, configured to push the second section 70 of the second segment 50 in a direction away from the first section 65 of the second segment 50 along a sliding axis S.

The sliding axis S is transverse, i.e. perpendicular to the first rotation axis R1 and the second rotation axis R2. In addition, the sliding axis S is parallel to the longitudinal axis L2 of the second segment 50.

Further, said sliding axis S is, for example, parallel to the oscillation axis P.

By pushing the second section 70 away from the first section 65, the tensioning assembly is configured to push the second drive shaft 130, which is for example associated with the second section 70 by means of the second sleeve 135 and therefore integral with the second section 70 slidingly along the sliding axis S, away from the first drive shaft 115, which first drive shaft 115 is rotatably associated (indirectly) with the first section 65.

In particular, the first drive shaft 115 is (directly) rotatably inserted within the first sleeve 75 to which the first section 65 is hinged according to a rotation axis coaxial to the first rotation axis R1.

In other words, the tensioning assembly, by pushing on the second section 70, pushes the second pulley 140, which is integral with the second drive shaft 130, away from the first pulley 125, which is integral with the first drive shaft 115, thus putting the flexible transmission member 145 wound thereon under tension.

In particular, the tensioning assembly can be configured to push the second section 70 in a direction away from the first section 65 along the sliding axis S constantly (i.e., at any instant of time), and automatically, i.e., without the need for adjustments by an operator using the tool 20.

The tensioning assembly comprises, first of all, an elastic body 230 interposed between the first section 65 and the second section 70 and arranged so that the elastic force generated by it is developed (mainly) along a direction parallel to the sliding axis S.

In particular, the elastic body 230 is configured to push the second section 70 in a direction away from the first section 65 along the sliding axis S, as anticipated above.

For example, the elastic body 230 comprises a helical compression spring (i.e. exerting an elastic force that resists a compressive force exerted on the spring).

The helical spring is interposed between the first section 65 and the second section 70 and is also arranged with its own longitudinal axis, along which it mainly exerts the resistant elastic force, parallel to the sliding axis S.

In particular, the helical spring is interposed between the first portion 65 and the second portion 70 and mounted pre-compressed, i.e. in a state of deformation such that its length along the longitudinal axis is less than the length along the longitudinal axis of the spring in an undeformed state, i.e. in the absence of external forces acting on the helical spring. As can be better seen in said figure 5, the helical spring is provided with a first longitudinal end which is placed in abutment on the first section 65 and with an opposite longitudinal end which is placed in abutment on the second section 70.

For example, the first longitudinal end is placed in abutment on the third sleeve 155 (which accommodates the oscillation pin 150 and is fixed without residual degrees of freedom to the first section 65 of the second segment 50) that is on an edge of the proximal third sleeve 155 and facing the second segment 50, while the second longitudinal end is placed in abutment on the connection plate 160 (which is fixed without residual degrees of freedom to the second section 70 of the second segment 50 and on which the receiving seat for the oscillation pin is defined 150).

However, it is not excluded that in an embodiment not illustrated and less preferred due to its complexity and therefore greater possibility of malfunctions, instead of the elastic element there may be a linear actuator configured to push the second section 70 in the direction away from the first section 65.

The tool 20 can also comprise an end-stroke assembly configured to limit the minimum distance between the first drive shaft 115 and the second drive shaft 130 along the sliding axis S, that is to limit the minimum distance between the first rotation axis R1 (of the first drive shaft 115) and the second rotation axis R2 (of the second drive shaft 130) along the sliding axis S.

The end-of-stroke assembly is, in other words, configured to obviate the possibility that, because of resistant forces due to normal use (which develop, for example, while mowing the turf) or due to expected impacts, the second drive shaft 130 may move closer to the first drive shaft 115, placing the flexible transmission member 145 in a condition of failed of or insufficient tensioning, which could lead to a slippage thereof on the first pulley 125 and on the second pulley 140 and, therefore, to a failed operation of the working member (i.e. the cutting member U).

The end-of-stroke assembly, in particular, can be configured to allow a variation of the value of the minimum distance between the first drive shaft 115 and the second drive shaft 130, i.e. between the first rotation axis R1 and the second rotation axis R2, with respect to the sliding axis S.

For example, in one embodiment not illustrated and less preferred, the end-of-stroke assembly can comprise a blocking body which can be selectively positioned, in a controllable manner (for example by screwing into a suitable thread), in a plurality of different positions along a direction parallel to the sliding axis S and adapted to block/prevent (for example by interference) the displacement of the second drive shaft 130 nearing the first drive shaft 115 along the sliding axis S beyond the position in which it is arranged (which therefore substantially defines said minimum distance).

In the preferred embodiment, visible in figure 5, the end-of-stroke assembly comprises a so-called tappet cam mechanism, provided with a cam rotatable with respect to the first section 65 of the second segment 50, i.e. to the base frame of the first section 65, according to a rotation axis perpendicular to the sliding axis S in which the tappet is made available by an abutment surface 235 of the second section 70 of the second segment 50, i.e. integral with the base frame of the second section 70 of the second segment 50, for example turned towards the first segment 45.

In particular, the tappet is made available by the oscillation pin 150 (which substantially defines the follower of the mechanism) which slides along the sliding axis S (however remaining axially contained within the third sleeve 155 integral with the first section 65 of the second segment 50).

The rotation of the cam 240 in a predetermined direction of rotation causes a thrust on the abutment surface 235 along the sliding axis S in the direction away from the first portion 65 of the second segment 50.

Just by way of simplification, with reference to Figure 5, the direction of rotation of the cam 240 is anti-clockwise.

Preferably, the end-of-stroke assembly is configured to automatically vary the value of the minimum distance between the first shaft and the second shaft on the basis of the value of the distance between the first shaft and the second shaft.

In such a case, the cam 240 of the mechanism is driven into rotation by its own weight force or at most by its own weight force and by a spring in the manner which will become more evident below.

In the illustrated embodiment, the end-of-stroke assembly comprises, first of all, an abutment surface 235 integral with the second section 70 slidingly along the sliding axis S in the direction nearing the first section 65.

Said abutment surface 235 is, for example, turned towards and facing one end of the first section 65 distal from the second section 70.

Said abutment surface 235 is, in the illustrated embodiment, made available by an axial end (lying on a flat surface) of the oscillation pin 150.

In particular, as better visible in figure 5, the oscillation pin 150 has a first axial end (which protrudes axially beyond the third sleeve 155 at the second section 70 and) which is placed in abutment on the second sleeve 135 inside which the second drive shaft 130 is slidingly associated, and an opposite second axial end (which protrudes axially beyond the third sleeve 155 at the first portion 65 and) which makes available said abutment surface 235.

In practice, the oscillation pin 150 is slidable with respect to both the first section 65 and the second section 70 along its oscillation axis P (which is then parallel to the sliding axis S) and is made integral with the second section 70 in the movement along the sliding axis S only when nearing the first section 65 by means of the thrust generated by the second sleeve 135 on the first end of the oscillation pin 150.

In fact, the second section 70 moving closer to the first section 65 pushes with the second sleeve 135 on the oscillation pin 150 causing it to slide inside the third sleeve 155 along the sliding axis S in the direction nearing the first section 65.

Therefore, the abutment surface 235 can slide with the second section 70 along the sliding axis S only in the nearing direction from the first section 65.

Were it not for the cam 240, the oscillation pin 150, therefore the abutment surface 235 would be free to move independently of the second section 70 in the direction away from the first section 65 along the sliding axis S.

The cam 240 (which substantially defines the moving part of the cam tappet mechanism 240) is rotatably associated with the first section 65 with respect to a substantially horizontal rotation axis W and transverse, preferably orthogonal, to the sliding axis S (and moreover lying on a plane perpendicular to the first rotation axis R1).

The rotation axis W of the cam 240 is also parallel to a lying plane of the abutment surface 235.

For example, the cam 240 can be hinged to the support bracket 110 (fixed without residual degrees of freedom to the, for example welded, to the base frame of the first section 65) and arranged inside the through channel of the second tubular body defined by the first section 65.

The cam 240 is adapted to be arranged (preferably directly) in contact with the abutment surface 235.

In particular, the cam 240 has a cam profile 245 by means of which it is placed (directly) in abutment on the abutment surface 235 made available for example by the oscillation pin 150.

Said cam profile 245 is, in particular, defined by an arc of a circle subtended at an angle having its centre on the rotation axis of the cam 240 and less than 180°.

In particular, the cam profile 245 has an upper end (i.e., placed at a height along the upper vertical in use) which is located at a distance from the rotation axis W, and a lower end, i.e. placed at a height along the lower vertical axis in use) which is located at a distance from the rotation axis W less than the distance between the upper end and the rotation axis of the cam 240.

In addition, the cam profile 245 has a gradually smaller distance from the rotation axis W with a monotonous decreasing course from the upper end to the lower end.

The cam profile 245 is therefore placed in abutment on the abutment surface 185, with the cam 240 free to rotate around its own rotation axis under the effect of its own weight force, so that a rotation of the cam 240 with respect to its rotation axis in a predetermined direction of rotation, that is in the direction that causes a lowering of the upper end along the vertical, causes a thrust on the abutment surface 185 in the distancing direction of the second section 70 from the first section 65 along the sliding axis S.

As mentioned above, the preferred end-of-stroke assembly is configured to automatically vary the value of the minimum distance between the first drive shaft 115 and the second drive shaft 130 based on the value of the distance between the first drive shaft 115 and the second drive shaft 130.

In other words, the distance between the first drive shaft 115 and the second drive shaft 130 along the sliding axis S, i.e., the distance between the first rotation axis R1 and the second rotation axis R2, varies according to the wear/elongation conditions of the flexible transmission member 145 by means of the tensioning assembly which pushes the second section 70 away from the first section 65 so as to keep (at all times) the flexible transmission member 145 in tension.

The end-of-stroke assembly can therefore be configured to adapt the minimum distance between the first drive shaft 115 and the second drive shaft 130 to the distance defined between them by means of the tensioning assembly.

More in detail, the end-of-stroke assembly is configured so that the minimum distance is equal to the distance defined by means of the tensioning assembly.

In other words, the end-of-stroke assembly makes it possible to prevent any retraction along the sliding axis S of the second section 70, or any approach of the second drive shaft 130 to the first drive shaft 115.

In particular, following a "correction", i.e. a variation, of the distance between the first drive shaft 115 and the second drive shaft 130 by the tensioning assembly, the oscillation pin 150 may be in a condition such that its first axial end is not in abutment on the second sleeve 135 inside which the second drive shaft 130 is slidably received.

In this condition, the minimum possible distance between the first drive shaft 115 and the second drive shaft 130 would be less than the distance defined between said shafts by means of the tensioning assembly.

In fact, in this condition, for example following an impact, the second drive shaft 130 may retract along the sliding axis S until the second sleeve 135 comes into abutment again on the first end of the oscillation pin 150.

The proposed end-of-stroke assembly, on the other hand, makes it possible to "correct", i.e. to vary automatically (without the need for adjustment by an operator), the minimum distance each time, and substantially simultaneously, the tensioning assembly varies the distance between the first drive shaft 115 and the second drive shaft 130.

In fact, as the tensioning assembly pushes the first second drive shaft 130 away from the first drive shaft 115, the cam 240, by effect of its own weight force, rotates and, thanks to its particular profile, pushes on the abutment surface 185 of the oscillation pin 150 causing it to slide along the sliding axis S in the direction away from the first section 65 keeping it, substantially continuously abutting on the second sleeve 135 integral with the second section 70.

As mentioned above, the rotation of the cam 240 about its rotation axis W may be assisted by an elastic element 250.

In particular, said elastic element 250 can be configured to pull, i.e. to exert a traction force such as to push, downwards, the cam 240, i.e. to push the cam 240 in rotation in the predetermined direction (direction such as to lower (with respect to the vertical) the upper end of the cam profile 245).

Such an elastic element 250 comprises, for example, a helical traction spring provided with a longitudinal axis along which it mainly exerts said elastic traction force.

The elastic spring is arranged with said longitudinal axis orthogonal to the rotation axis of the cam 240.

In particular, said elastic spring has a first axial end which is connected (coupled) to the first section 65 and an opposite second end which is connected (coupled) to the cam 240, for example in a position interposed between the cam profile 245 (between the upper and lower ends of the cam profile 245) and the rotation axis of the cam 240.

For example, the first end of the elastic spring may be coupled on the base frame T2 of the first section 65, while the second end of the elastic spring is coupled on a lug made on the cam 240, for example made available by a pin fitted in a through slot made on the cam 240 and arranged with a longitudinal axis parallel to the rotation axis.

In the embodiment illustrated, in the first position the longitudinal axis of the first segment and the longitudinal axis of the second segment are parallel to each other (and for example lie on the vertical centreline plane of the agricultural machine).

In the second position, the longitudinal axis of the second segment is inclined with respect to the vertical centreline of the agricultural machine.

Furthermore, the length of the second segment in the direction of the respective longitudinal axis and the angle between the first segment and the second segment in the second position are such that the second rotation axis protrudes laterally with respect to the maximum overall lateral dimensions of the agricultural machinery when the second segment is in the second position.

Furthermore, the protective case is shaped in such a way as to protrude laterally with respect to the maximum overall dimensions of the agricultural machine. Furthermore, when the second segment is in the second position in rotation with respect to the first segment, the protective case protrudes laterally on one side only with respect to the maximum overall dimensions of the agricultural machine (more than half protrudes with respect to the maximum overall dimensions).

The invention thus conceived is susceptible to several modifications and variations, all falling within the scope of the appended claims.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. Brush cutter tool (20) for an agricultural machine (15):
- a support arm (40) comprising a first segment (45) adapted to be connected to the agricultural machine (15),
- a second segment (50) provided with an end connected to the first segment (45) and with an opposite free end,
- a cutting member (U) connected to the free end of the second segment (50) of the support arm (40), and rotatably associated with respect to a rotation axis transversal to a longitudinal axis (L2) of the second segment (50),said second segment (50) being hinged to the first segment (45) with respect to at least one hinge axis (C) **characterised in that** the second segment (50) comprises a first section (65) associated with the first segment (45) and a second section (70) with which the cutting member (U) is associated and which is rotatably associated with the first section (65) around an oscillation axis (P), and wherein the tool (20) comprises an oscillation assembly configured to vary the relative angular position (90) between the first section (65) and the second with respect to the oscillation axis (P) which is parallel to the longitudinal axis (L2).

2. Brush cutter tool (20) according to claim 1, comprising a rotation blocking assembly of the second segment (50) with respect to the first segment (45) configured to selectively block the relative rotation with respect to the hinge axis (C) between the first segment (45) and the second segment (50), at least in a first position and in a second position, and to selectively allow a free rotation between the first segment (45) and the second segment (50).

3. Brush cutter tool (20) according to claim 2, wherein in the first position the longitudinal axes (L1,L2) of the first segment (45) and of the second segment (50) lie on parallel vertical lying planes or between them a first angle is defined, and in the second position the longitudinal axes of the first segment and of the second segment lie on vertical lying planes between which a second non-zero angle and/or greater than the first angle is defined

4. Brush cutter tool (20) according to claim 1, wherein the blocking assembly comprises a toothed crown (85) associated with one between the first segment (45) and the second segment (50), and an insertion pin (100) associated with the other one between the first segment (45) and the second segment (50), the insertion pin (100) being operable between an engagement position in which it is constrained by shape coupling to the toothed crown (85) and prevents the rotation of the second segment (50) with respect to the first segment (45), and a disengagement position in which it is released from the toothed crown (85) and allows the rotation of the second segment (50) with respect to the first segment (45).

5. Brush cutter tool (20) according to the preceding claim, wherein the blocking assembly comprises an actuating lever (105) integral with the insertion pin (100) and configured to move the same between the engagement position and the disengagement position, the actuating lever (105) being movable between a distancing position, corresponding to the disengagement position of the insertion pin (100), and a nearing position, corresponding to the engagement position of the insertion pin (100), the blocking assembly further comprising elastic action means associated with the actuating lever (105) and adapted to push the same towards the nearing position.

6. Brush cutter tool (20) according to claim 1 or 3, comprising a protective case (220) associated with the cutting member (U), the protective case (220) being arranged to circumferentially delimit a working area within which the cutting member (U) rotates, the protective case (220) being rotatably associated with the cutting member (U) with respect to a rotation axis parallel to the rotation axis of the cutting member (U) itself and wherein the brush cutter tool (20) comprises a blocking assembly configured to prevent the rotation of the protective case (220) about said rotation axis parallel to the rotation axis of the cutting member (U) during the rotation of the second segment (50) between the first position and the second position.

7. Brush cutter tool (20) according to claim 6, wherein the blocking assembly is configured to maintain the position of the protective casing (220) unchanged when the second segment is in the first position, in the second position and in all intermediate positions.

8. Brush cutter tool (20) according to claims 3 and 6, wherein the blocking assembly is configured so that an imaginary line traceable on the protective case (220) and parallel to the longitudinal axis of the first segment (45) when the second segment (50) is in the first position of rotation with respect to the first segment (45), remains parallel to said longitudinal axis also when the second segment (50) is in the second position of rotation with respect to the first segment (45) and in all intermediate positions.

9. Brush cutter tool (20) according any of claims 6-8, wherein the blocking assembly comprises a rod (225) provided with an end hinged to the first segment (45) with respect to a first hinge axis (Q1) and an opposite end hinged to the protective case (220) with respect to a second hinge axis (Q2) parallel to and distinct from the first hinge axis (Q1).

10. Brush cutter tool (20) according to claim 1, wherein the oscillation assembly allows an oscillation of the second section (70) with respect to the first section (65) between a reference position, in which the rotation axis of the cutting member (U) lies on a vertical plane, and in an inclined position, in which the rotation axis of the cutting member (U) is transverse to said vertical plane.

11. Brush cutter tool (20) according to the preceding claim, wherein the oscillation assembly comprises:
- a support bar (165) rotatably associated with the first section (65) of the second segment (50) of the support arm (40),
- a first annular support (170) and a second annular support that are fitted on the support bar (165) and rigidly integral with it in rotation, said first and second annular support (175) being adapted to make available a resting surface (180) for an abutment surface (185) of the second section (70) integral with the second drive shaft (130) with respect to an oscillation about the oscillation axis (P), and wherein the first annular support (170) and the second annular support (175) each have a first flat perimeter face and a second flat perimeter face, the first perimeter faces being coplanar, while the second faces are placed at a different radial distance from the rotation axis of the support bar (165), the support bar (165) being rotatable to achieve the reference position of the cutting member (U), wherein the first faces of the first annular support (170) and of the second annular support (175) lie on a plane parallel to the rotation axis of the second section (70) and the resting surface (180) for the connection casing is made available by said first faces, and to achieve the inclined position, wherein the second faces of the first annular support (170) and of the second annular support (175) lie in respective planes parallel to the rotation axis of the support casing and the resting surface (180) for the connection casing is made available from the second faces.

12. Brush cutter apparatus (10) comprising:
- an agricultural machine (15) provided with:
∘ a support frame,
∘ a motor installed on the support frame,
∘ at least one pair of wheels (30) rotatably associated with the support frame,
- a brush cutter tool (20) according to claim 1 connected to the agricultural machine (15).

13. Brush cutter apparatus (10) according to claim 12, wherein the cutting member (U) of the brush cutter tool (20) protrudes beyond maximum transverse overall dimensions of the agricultural machine (15) when the second segment (50) is in the second position.

## Patentansprüche

1. Freischneiderwerkzeug (20) für eine landwirtschaftliche Maschine (15):
- ein Tragarm (40), umfassend ein erstes Segment (45), das angepasst ist, um mit der landwirtschaftlichen Maschine (15) verbunden zu sein,
- ein zweites Segment (50), das mit einem Ende, das mit dem ersten Segment (45) verbunden ist, und mit einem gegenüberliegenden freien Ende versehen ist,
- ein Schneidelement (U), das mit dem freien Ende des zweiten Segments (50) des Tragarms (40) verbunden ist und in Bezug auf eine Drehachse quer zu einer Längsachse (L2) des zweiten Segments (50) drehbar assoziiert ist, wobei das zweite Segment (50) an dem ersten Segment (45) in Bezug auf mindestens eine Gelenkachse (C) angelenkt ist **dadurch gekennzeichnet, dass** das zweite Segment (50) einen ersten Abschnitt (65), der mit dem ersten Segment (45) assoziiert ist, und einen zweiten Abschnitt (70), mit dem das Schneidelement (U) assoziiert ist und der drehbar mit dem ersten Abschnitt (65) um eine Schwingungsachse (P) assoziiert ist, umfasst, und wobei das Werkzeug (20) eine Schwingungsanordnung umfasst, die konfiguriert ist, um die relative Winkelposition (90) zwischen dem ersten Abschnitt (65) und dem zweiten in Bezug auf die Schwingungsachse (P), die parallel zu der Längsachse (L2) ist, zu variieren.

2. Freischneiderwerkzeug (20) nach Anspruch 1, umfassend eine Drehsperranordnung des zweiten Segments (50) in Bezug auf das erste Segment (45), die konfiguriert ist, um selektiv die relative Drehung in Bezug auf die Gelenkachse (C) zwischen dem ersten Segment (45) und dem zweiten Segment (50) zumindest in einer ersten Position und in einer zweiten Position zu sperren, und um selektiv eine freie Drehung zwischen dem ersten Segment (45) und dem zweiten Segment (50) zuzulassen.

3. Freischneiderwerkzeug (20) nach Anspruch 2, wobei die Längsachsen (L1, L2) des ersten Segments (45) und des zweiten Segments (50) in der ersten Position auf parallelen senkrecht liegenden Ebenen liegen oder dazwischen ein erster Winkel definiert ist, und die Längsachsen des ersten Segments und des zweiten Segments in der zweiten Position auf senkrecht liegenden Ebenen liegen, wozwischen ein zweiter Winkel ungleich Null und/oder größer als der erste Winkel definiert ist,

4. Freischneiderwerkzeug (20) nach Anspruch 1, wobei die Sperranordnung einen Zahnkranz (85), der mit einem von dem ersten Segment (45) und dem zweiten Segment (50) assoziiert ist, und einen Einsteckstift (100), der mit dem anderen von dem ersten Segment (45) und dem zweiten Segment (50) assoziiert ist, umfasst, wobei der Einsteckstift (100) zwischen einer Eingriffsposition, in der er durch Formschluss an den Zahnkranz (85) gehalten wird und die Drehung des zweiten Segments (50) in Bezug auf das erste Segment (45) verhindert, und einer Ausrückposition, in der er von dem Zahnkranz (85) gelöst ist und die Drehung des zweiten Segments (50) in Bezug auf das erste Segment (45) zulässt, betätigbar ist.

5. Freischneiderwerkzeug (20) nach dem vorherigen Anspruch, wobei die Sperranordnung einen Betätigungshebel (105) umfasst, der mit dem Einsteckstift (100) einstückig und konfiguriert ist, um diesen zwischen der Eingriffsposition und der Ausrückposition zu bewegen, wobei der Betätigungshebel (105) zwischen einer Abstandsposition, die der Freigabeposition des Einsteckstifts (100) entspricht, und einer Annäherungsposition, die der Eingriffsposition des Einsteckstifts (100) entspricht, bewegbar ist, die Sperranordnung ferner umfassend elastische Aktionseinrichtungen, die mit dem Betätigungshebel (105) assoziiert und angepasst sind, um diesen in Richtung der Annäherungsposition zu drücken.

6. Freischneiderwerkzeug (20) nach Anspruch 1 oder 3, umfassend ein Schutzgehäuse (220), das mit dem Schneidelement (U) assoziiert ist, wobei das Schutzgehäuse (220) angeordnet ist, um in Umfangsrichtung einen Arbeitsbereich abzugrenzen, in dem das Schneidelement (U) dreht, das Schutzgehäuse (220) drehbar mit dem Schneidelement (U) in Bezug auf eine Drehachse parallel zu der Drehachse des Schneidelements (U) an sich assoziiert ist, und wobei das Freischneiderwerkzeug (20) eine Sperranordnung umfasst, die konfiguriert ist, um während der Drehung des zweiten Segments (50) zwischen der ersten Position und der zweiten Position die Drehung des Schutzgehäuses (220) um die Drehachse parallel zu der Drehachse des Schneidelements (U) zu verhindern.

7. Freischneiderwerkzeug (20) nach Anspruch 6, wobei die Sperranordnung konfiguriert ist, um die Position des Schutzgehäuses (220) beizubehalten, wenn das zweite Segment in der ersten Position, in der zweiten Position und in allen Zwischenpositionen ist.

8. Freischneiderwerkzeug (20) nach einem der Ansprüche 3 und 6, wobei die Sperranordnung konfiguriert ist, sodass eine imaginäre Linie, die auf dem Schutzgehäuse (220) und parallel zu der Längsachse des ersten Segments (45) verfolgbar ist, wenn das zweite Segment (50) in der ersten Drehposition in Bezug auf das erste Segment (45) ist, auch dann parallel zu dieser Längsachse bleibt, wenn das zweite Segment (50) in der zweiten Drehposition in Bezug auf das erste Segment (45) und in allen Zwischenpositionen ist.

9. Freischneiderwerkzeug (20) nach einem der Ansprüche 6-8, wobei die Sperranordnung eine Stange (225) umfasst, die mit einem Ende, das an dem ersten Segment (45) in Bezug auf eine erste Gelenkachse (01) angelenkt ist, und mit einem gegenüberliegenden Ende, das an dem Schutzgehäuse (220) in Bezug auf eine zweite Gelenkachse (02) angelenkt ist, die parallel zu und verschieden von der ersten Gelenkachse (01) ist, versehen ist.

10. Freischneiderwerkzeug (20) nach Anspruch 1, wobei die Schwingungsanordnung eine Schwingung des zweiten Abschnitts (70) in Bezug auf den ersten Abschnitt (65) zwischen einer Referenzposition, in der die Drehachse des Schneidelements (U) auf einer vertikalen Ebene liegt, und einer geneigten Position, in der die Drehachse des Schneidelements (U) quer zu dieser vertikalen Ebene liegt, zulässt.

11. Freischneiderwerkzeug (20) nach dem vorherigen Anspruch, wobei die Schwingungsanordnung Folgendes umfasst:
- einen Haltestab (165), der drehbar mit dem ersten Abschnitt (65) des zweiten Segments (50) des Haltearms (40) assoziiert ist,
- eine erste ringförmige Halterung (170) und eine zweite ringförmige Halterung, die an dem Haltestab (165) angebracht und damit drehfest verbunden sind, wobei die erste und die zweite ringförmige Halterung (175) angepasst sind, um eine Auflagefläche (180) für eine mit der zweiten Antriebswelle (130) einstückige Anlagefläche (185) des zweiten Abschnitts (70) in Bezug auf eine Schwingung um die Schwingungsachse (P) bereitzustellen, und wobei die erste ringförmige Halterung (170) und die zweite ringförmige Halterung (175) jeweils eine erste flache Umfangsfläche und eine zweite flache Umfangsfläche aufweisen, wobei die ersten Umfangsflächen koplanar sind, während die zweiten Flächen in einem anderen radialen Abstand von der Drehachse des Haltestabs (165) platziert sind, wobei der Haltestab (165) drehbar ist, um die Referenzposition des Schneidelements (U) zu erreichen, wobei die ersten Flächen der ersten ringförmigen Halterung (170) und der zweiten ringförmigen Halterung (175) auf einer Ebene parallel zu der Drehachse des zweiten Abschnitts (70) liegen und die Auflagefläche (180) für das Verbindungsgehäuse durch die ersten Flächen verfügbar gemacht wird, und um die geneigte Position zu erreichen, wobei die zweiten Flächen der ersten ringförmigen Halterung (170) und der zweiten ringförmigen Halterung (175) in jeweiligen Ebenen parallel zu der Drehachse des Halterungsgehäuses liegen und die Auflagefläche (180) für das Verbindungsgehäuse von den zweiten Flächen verfügbar gemacht wird.

12. Freischneidervorrichtung (10), umfassend:
- eine landwirtschaftliche Maschine (15), die mit Folgendem versehen ist:
∘ einem Halterahmen,
∘ einem auf dem Halterahmen installierten Motor,
∘ mindestens einem Paar Räder (30), die drehbar mit dem Halterahmen assoziiert sind,
- einem Freischneiderwerkzeug (20) nach Anspruch 1, das mit der landwirtschaftlichen Maschine (15) verbunden ist.

13. Freischneiderwerkzeug (10) nach Anspruch 12, wobei das Schneidelement (U) des Freischneiderwerkzeugs (20) über die maximalen Querabmessungen der Landmaschine (15) hervorsteht, wenn das zweite Segment (50) in der zweiten Position ist.

## Revendications

1. Débroussailleuse (20) pour machine agricole (15) :
- un bras de support (40) comprenant un premier segment (45) adapté pour être relié à la machine agricole (15),
- un deuxième segment (50) comprenant une extrémité reliée au premier segment (45) et une extrémité libre opposée,
- un élément de coupe (U) relié à l'extrémité libre du deuxième segment (50) du bras de support (40) et associé de manière rotative par rapport à un axe de rotation transversal à un axe longitudinal (L2) du deuxième segment (50), ledit deuxième segment (50) étant articulé au premier segment (45) par rapport à au moins un axe d'articulation (C), **caractérisé en ce que** le deuxième segment (50) comprend une première section (65) associée au premier segment (45) et une deuxième section (70) à laquelle l'élément de coupe (U) est associé et qui est associé de manière rotative à la première section (65) autour d'un axe d'oscillation (P), et dans laquelle l'outil (20) comprend un ensemble d'oscillation configuré pour faire varier la position angulaire relative (90) entre la première section (65) et la deuxième par rapport à l'axe d'oscillation (P) parallèle à l'axe longitudinal (L2).

2. Débroussailleuse (20) selon la revendication 1, comprenant un ensemble de blocage de rotation du deuxième segment (50) par rapport au premier segment (45) configuré pour bloquer de manière sélective la rotation relative par rapport à l'axe d'articulation (C) entre le premier segment (45) et le deuxième segment (50), au moins dans une première position et dans une deuxième position, et pour permettre de manière sélective une rotation libre entre le premier segment (45) et le deuxième segment (50).

3. Débroussailleuse (20) selon la revendication 2, dans laquelle, dans la première position, les axes longitudinaux (L1, L2) du premier segment (45) et du deuxième segment (50) reposent sur des plans verticaux parallèles ou qu'un premier angle est défini entre eux, et dans la deuxième position, les axes longitudinaux du premier segment et du deuxième segment reposent sur des plans verticaux entre lesquels un deuxième angle non nul et/ou supérieur au premier angle est défini.

4. Débroussailleuse (20) selon la revendication 1, dans laquelle l'ensemble de blocage comprend une couronne dentée (85) associée à l'un des segments entre le premier segment (45) et le deuxième segment (50), et une goupille d'insertion (100) associée à l'autre segment entre le premier segment (45) et le deuxième segment (50), la goupille d'insertion (100) pouvant être actionnée entre une position d'engagement dans laquelle elle est retenue par couplage de forme à la couronne dentée (85) et empêche la rotation du deuxième segment (50) par rapport au premier segment (45), et une position de désengagement dans laquelle elle est libérée de la couronne dentée (85) et permet la rotation du deuxième segment (50) par rapport au premier segment (45).

5. Débroussailleuse (20) selon la revendication précédente, dans laquelle l'ensemble de blocage comprend un levier d'actionnement (105) intégré à la goupille d'insertion (100) et configuré pour déplacer celle-ci entre la position d'engagement et la position de désengagement, le levier d'actionnement (105) pouvant être déplacé entre une position d'écartement, correspondant à la position de désengagement de la goupille d'insertion (100), et une position de rapprochement, correspondant à la position d'engagement de la goupille d'insertion (100), l'ensemble de blocage comprenant en outre des moyens à action élastique associés au levier d'actionnement (105) et adaptés pour pousser celui-ci vers la position de rapprochement.

6. Débroussailleuse (20) selon la revendication 1 ou 3, comprenant un boîtier de protection (220) associé à l'élément de coupe (U), le boîtier de protection (220) étant agencé pour délimiter de manière circonférentielle une zone de travail à l'intérieur de laquelle l'élément de coupe (U) tourne, le boîtier de protection (220) étant associé de manière rotative à l'élément de coupe (U) par rapport à un axe de rotation parallèle à l'axe de rotation de l'élément de coupe (U) lui-même, et dans lequel la débroussailleuse (20) comprend un ensemble de blocage configuré pour empêcher la rotation du boîtier de protection (220) autour dudit axe de rotation parallèle à l'axe de rotation de l'élément de coupe (U) pendant la rotation du deuxième segment (50) entre la première position et la deuxième position.

7. Débroussailleuse (20) selon la revendication 6, dans laquelle l'ensemble de blocage est configuré pour maintenir la position du boîtier de protection (220) inchangée lorsque le deuxième segment se trouve dans la première position, dans la deuxième position et dans toutes les positions intermédiaires.

8. Débroussailleuse (20) selon les revendications 3 et 6, dans laquelle l'ensemble de blocage est configuré de telle sorte qu'une ligne imaginaire traçable sur le boîtier de protection (220) et parallèle à l'axe longitudinal du premier segment (45) lorsque le deuxième segment (50) est dans la première position de rotation par rapport au premier segment (45), reste parallèle audit axe longitudinal également lorsque le deuxième segment (50) se trouve dans la deuxième position de rotation par rapport au premier segment (45) et dans toutes les positions intermédiaires.

9. Débroussailleuse (20) selon l'une quelconque des revendications 6 à 8, dans laquelle l'ensemble de blocage comprend une tige (225) munie d'une extrémité articulée au premier segment (45) par rapport à un premier axe d'articulation (Q1) et d'une extrémité opposée articulée au boîtier de protection (220) par rapport à un deuxième axe d'articulation (Q2) parallèle au premier axe d'articulation et distinct de celui-ci (Q1).

10. Débroussailleuse (20) selon la revendication 1, dans laquelle l'ensemble oscillant permet une oscillation de la deuxième section (70) par rapport à la première section (65) entre une position de référence, dans laquelle l'axe de rotation de l'élément de coupe (U) repose sur un plan vertical, et une position inclinée, dans laquelle l'axe de rotation de l'élément de coupe (U) est transversal par rapport audit plan vertical.

11. Débroussailleuse (20) selon la revendication précédente, dans laquelle l'ensemble oscillant comprend :
- une barre de support (165) associée de manière rotative à la première section (65) du deuxième segment (50) du bras de support (40),
- un premier support annulaire (170) et un deuxième support annulaire qui sont montés sur la barre de support (165) et intégrés à celle-ci en rotation, lesdits premier et deuxième supports annulaires (175) étant adaptés pour fournir une surface d'appui (180) destinée à une surface de butée (185) de la deuxième section (70) solidaire du deuxième arbre d'entraînement (130) par rapport à une oscillation autour de l'axe d'oscillation (P), et dans laquelle le premier support annulaire (170) et le deuxième support annulaire (175) ont chacun une première face périphérique plane et une deuxième face périphérique plane, les premières faces périphériques étant coplanaires, tandis que les deuxièmes faces sont placées à une distance radiale différente de l'axe de rotation de la barre de support (165), la barre de support (165) pouvant tourner pour atteindre la position de référence de l'élément de coupe (U), dans lequel les premières faces du premier support annulaire (170) et du deuxième support annulaire (175) se trouvent sur un plan parallèle à l'axe de rotation de la deuxième section (70) et la surface d'appui (180) pour le boîtier de connexion est mise à disposition par lesdites premières faces, et pour atteindre la position inclinée, les deuxièmes faces du premier support annulaire (170) et du deuxième support annulaire (175) reposant sur des plans respectifs parallèles à l'axe de rotation du boîtier de support et la surface d'appui (180) pour le boîtier de raccordement étant mise à disposition par les deuxièmes faces.

12. Débroussailleuse (10) comprenant :
- une machine agricole (15) comprenant :
∘ un cadre de support,
∘ un moteur installé sur le cade de support,
∘ au moins une paire de roues (30) associées de manière rotative au cadre de support,
- une débroussailleuse (20) selon la revendication 1 reliée à la machine agricole (15).

13. Débroussailleuse (10) selon la revendication 12, dans laquelle l'élément de coupe (U) de la débroussaillage (20) dépasse les dimensions transversales maximales globales de la machine agricole (15) lorsque le deuxième segment (50) se trouve dans la deuxième position.
